(19) Europäisches Patentamt
European Patent Office
Office européen des brevets

(11) EP 1 526 155 A1

(12) **EUROPEAN PATENT APPLICATION**
published in accordance with Art. 158(3) EPC

(43) Date of publication:
**27.04.2005 Bulletin 2005/17**

(21) Application number: **03741471.1**

(22) Date of filing: **17.07.2003**

(51) Int Cl.[7]: **C08L 57/00**, C08K 5/00, B29C 33/60

(86) International application number:
**PCT/JP2003/009126**

(87) International publication number:
**WO 2004/011552 (05.02.2004 Gazette 2004/06)**

(84) Designated Contracting States:
**AT BE BG CH CY CZ DE DK EE ES FI FR GB GR HU IE IT LI LU MC NL PT RO SE SI SK TR**

(30) Priority: **30.07.2002 JP 2002221373**

(71) Applicant: **KANEKA CORPORATION**
**Osaka-shi, Osaka 530-8288 (JP)**

(72) Inventors:
- **KOTANI, Jun, c/o KANEKA CORPORATION**
**Settsu-shi, Osaka 566-0072 (JP)**
- **NAKAGAWA, Yoshiki,**
**c/o KANEKA CORPORATION**
**Settsu-shi, Osaka 566-0072 (JP)**

(74) Representative: **Hubert, Philippe et al**
**Cabinet Beau de Loménie**
**158, rue de l'Université**
**75340 Paris Cédex 07 (FR)**

(54) **MOLD-RELEASABLE CURABLE COMPOSITION**

(57) It is an object of the present invention to provide a curable composition for molding which contains a vinyl polymer having excellent oil resistance, heat resistance, weatherability, etc., which can be cured by hydrosilylation, and which has improved mold release properties.

Specifically, the curable composition of the present invention contains the following four components as essential components:

(A) a vinyl polymer (I) containing at least one hydrosilylatable alkenyl group per molecule,
(B) a hydrosilyl group-containing compound (II),
(C) a hydrosilylation catalyst, and
(D) a metal soap.

As the metal soap, a metal stearate is preferable, and particularly, calcium stearate, magnesium stearate, or zinc stearate is preferable.

EP 1 526 155 A1

## Description

Technical Field

The present invention relates to curable compositions. More particularly, the invention relates to a curable composition for molding which contains an alkenyl group-containing vinyl polymer, a hydrosilyl group-containing compound, and a hydrosilylation catalyst as essential components, and which has mold release properties.

Background Art

Molded objects containing vinyl polymers or (meth)acrylic polymers as major components are produced by mixing high molecular weight polymers and various additives under heating with a roller, in a mill, or the like, and molding the resultant mixtures. In order to mold a thermoplastic resin or thermosetting resin, the resin must be turned into a molten state by application of heat before molding, and thus it is not possible to use heat-sensitive additives, which is disadvantageous. In order to mold rubber, such as acrylic rubber, unvulcanized rubber is mixed with compounding agents, such as a filler and a vulcanizing agent, and the mixture is vulcanized and molded. In such a case, in addition to the problem described above, other problems also arise, such as, low workability and low vulcanizing rate, e.g., adhesion to the roller during mixing, difficulty in smoothing during sheeting, and low flow properties during molding, and low hardenability, e.g., need of long post-curing time. In order to overcome these problems, Japanese Unexamined Patent Application Publication Nos. 9-272714 and 2000-154255, etc., each disclose a curable composition which contains an alkenyl group-containing vinyl polymer and a hydrosilyl group-containing compound and which can be cured by hydrosilylation. However, with respect to cured objects obtained from such curable compositions, in some cases, mold release properties are not sufficient and the cured objects are damaged during removal from the mold or the like, resulting in rubber splitting, or rubber fails to be released from the mold.

Disclosure of Invention

It is an object of the present invention to provide a curable composition for molding which contains a vinyl polymer generally capable of producing cured objects having good mechanical characteristics, oil resistance, heat resistance, weatherability, etc., which can be cured by hydrosilylation, and which has excellent mold release properties.

The present inventors have conducted intensive research to solve the problems described above and have found that when an alkenyl group-containing vinyl polymer is used in a curing system (addition curing system) which can be cured by hydrosilylation, by adding a metal soap thereto, it is possible to produce a composition having excellent mold release properties. The present invention has thus been achieved.

Namely, the present invention relates to a curable composition containing the following four components as essential components:

(A) a vinyl polymer (I) containing at least one hydrosilylatable alkenyl group per molecule,
(B) a hydrosilyl group-containing compound (II),
(C) a hydrosilylation catalyst, and
(D) a metal soap.

Best Mode for Carrying Out the Invention

Curable compositions of the present invention will be described in detail below.

<<Vinyl polymer (I)>>

<Main chain>

The vinyl monomer constituting the main chain of the vinyl polymer (I) of the present invention is not particularly limited, and various types of vinyl monomer can be used. Examples of the vinyl monomer include (meth)acrylic monomers, such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth) acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate,

γ-(methacryloyloxypropyl)trimethoxysilane, ethylene oxide adducts of (meth)acrylic acid, trifluoromethylmethyl (meth) acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate; styrene monomers, such as styrene, vinyltoluene, α-methylstyrene, chlorostyrene, styrenesulfonic acid, and salts thereof; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid, and monoalkyl esters and dialkyl esters of fumaric acid; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers, such as acrylonitrile and methacrylonitrile; amide group-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, and allyl alcohol. In the present invention, preferably, at least one of the monomers described above is mainly polymerized ("being mainly polymerized" usually means that polymerization is performed using the monomer in an amount of 50% by weight or more of the total monomer component). These monomers may be used alone, or two or more of these may be copolymerized. Among these monomers, in view of physical properties of the resulting product, etc., preferred are styrene monomers and (meth)acrylic monomers. More preferred are acrylate monomers and methacrylate monomers, still more preferred are acrylate monomers, and even more preferred is butyl acrylate. In the present invention, these preferred monomers may be copolymerized or block copolymerized with other monomers. In such a case, preferably, the content of these preferred monomers is 40% by weight. In the expression described above, for example, (meth)acrylic acid represents acrylic acid and/or methacrylic acid. In the present invention, the (meth)acrylic polymer is usually defined as a polymer produced using the (meth)acrylate in an amount of 30% by weight or more of the total monomer component.

The molecular-weight distribution, i.e., the ratio of the weight-average molecular weight to the number-average molecular weight determined by gel permeation chromatography (GPC), of the polymer (I) of the present invention is not particularly limited, but is preferably less than 1.8, more preferably 1.7 or less, still more preferably 1.6 or less, even more preferably 1.5 or less, particularly preferably 1.4 or less, and most preferably 1.3 or less. In the present invention, GPC is usually performed using chloroform as the mobile phase and a polystyrene gel column. The number-average molecular weight, etc., is calculated on the basis of a polystyrene standard sample.

The number-average molecular weight of the vinyl polymer of the present invention is not particularly limited, but is preferably 500 to 1,000,000, and more preferably 1,000 to 100,000. If the molecular weight is too low, the original characteristics of the vinyl polymer are not easily exhibited. If the molecular weight is too high, the vinyl polymer becomes difficult to handle.

<Synthesis of polymer>

The vinyl polymer (I) of the present invention can be prepared by various polymerization methods, and the preparation method is not particularly limited. In view of versatility of monomer and ease of control, radical polymerization is preferable. Among radical polymerization methods, controlled radical polymerization is preferable, living radical polymerization is more preferable, and atom transfer radical polymerization is particularly preferable.

Examples of the method for introducing the alkenyl group include methods in which the alkenyl group is directly introduced in a polymerization reaction system, and methods including the steps of synthesizing a vinyl polymer having a specific functional group and then converting the specific functional group into the alkenyl group in one or several reaction stages.

The synthesis methods will be described below.

Radical polymerization

The methods for synthesizing a vinyl polymer having a functional group by radical polymerization can be classified into two categories, namely, "ordinary radical polymerization" and "controlled radical polymerization".

The "ordinary radical polymerization" is a method in which a vinyl monomer having a specific functional group (hereinafter referred to as a "functional monomer") and another vinyl monomer are simply copolymerized using a polymerization initiator, such as an azo compound or a peroxide. On the other hand, the "controlled radical polymerization" is a method in which a specific functional group can be introduced into a controlled position, for example, a terminus.

Ordinary radical polymerization

The "ordinary radical polymerization" is a simple method and can also be used in the present invention. However, since copolymerization is performed, the specific functional group is introduced into the polymer only at random. Consequently, in order to produce a polymer having a high functionality factor, a considerable amount of the functional monomer must be used. If the amount of the functional monomer used is small, the percentage of the polymer into which the specific functional group is not introduced increases. Furthermore, since free radical polymerization is performed, only a polymer having a broad molecular-weight distribution and a high viscosity is produced, which is also disadvantageous.

Controlled radical polymerization

The "controlled radical polymerization" can be classified into two categories, namely, "chain transfer polymerization" and "living radical polymerization".
The "controlled radical polymerization" is characterized in that polymerization is performed using a chain transfer agent having a specific functional group, and a functional group-terminated vinyl polymer is produced. On the other hand, the "living radical polymerization" is characterized in that by using a special polymerization system, the propagation end of the polymer propagates without causing side reactions, such as a termination reaction. Consequently, in the "living radical polymerization", a polymer having a molecular weight substantially as designed can be produced.

Chain transfer polymerization

The "chain transfer polymerization" can also be used in the present invention because a functional group can be introduced into the terminus of the polymer more quantitatively compared with the "ordinary radical polymerization". However, a considerable amount of chain transfer agent having a specific functional group is required relative to the initiator and the chain transfer agent must be subjected to treatment such as recovery, giving rise to economic problems. Furthermore, as in the "ordinary radical polymerization", since free radical polymerization is performed, a polymer having a broad molecular-weight distribution and a high viscosity is produced, which is disadvantageous.
The radical polymerization using a chain transfer agent (telomer) is not particularly limited. As the method for producing a vinyl polymer having the terminal structure suitable in the present invention, the following two methods are exemplified.
Namely, in a first method, a halogen-terminated polymer is produced using a halogenated hydrocarbon as a chain transfer agent as disclosed in Japanese Unexamined Patent Application Publication No. 4-132706. In a second method, a hydroxyl group-terminated polymer is produced using a hydroxyl group-containing mercaptan, a hydroxyl group-containing polysulfide, or the like as a chain transfer agent as disclosed in Japanese Unexamined Patent Application Publication No. 61-271306, Japanese Patent No. 2594402, Japanese Unexamined Patent Application Publication No. 54-47782, or the like.

Living radical polymerization

Radical polymerization is generally considered to be difficult to control because the polymerization rate is high and the termination reaction due to coupling between radicals, etc., easily occurs. However, unlike the polymerization methods described above, although being radical polymerization, the "living radical polymerization" is characterized in that side reactions, such as a termination reaction, do not easily occur, a polymer having a narrow molecular-weight distribution (Mw/Mn of about 1.1 to 1.5) can be produced, and the molecular weight can be freely controlled by the monomer-initiator charge ratio.
Consequently, in the "living radical polymerization", a polymer having a narrow molecular-weight distribution and a low viscosity can be produced, and furthermore, a monomer having a specific functional group can be introduced into a substantially any position of the polymer. Thus, the "living radical polymerization" is more preferable as the method for producing the vinyl polymer having a specific functional group.
In the narrow sense, the term "living polymerization" refers to polymerization in which molecular chains grow with the termini always being active. In the ordinary sense, the living polymerization also includes pseudo-living polymerization in which molecular chains grow with deactivated termini and activated termini being in equilibrium. The latter definition applies to the present invention.
Recently, the "living radical polymerization" has been actively studied by various groups. Examples thereof include living radical polymerization using a cobalt porphyrin complex as shown in Journal of American Chemical Society (J. Am. Chem. Soc.) 1994, 116, 7943; living radical polymerization using a radical scavenger, such as a nitroxide

compound, as shown in Macromolecules 1994, 27, 7228; and "atom transfer radical polymerization" (ATRP) using an organic halide or the like as an initiator and a transition metal complex as a catalyst.

Among the "living radical polymerization methods", the "atom transfer radical polymerization" in which a vinyl monomer is polymerized using an organic halide or a halogenated sulfonyl compound as an initiator and a transition metal complex as a catalyst has the characteristics of the "living radical polymerization" described above and is also characterized in that the chain is terminated with a halogen or the like that is relatively advantageous to functional group conversion reaction, and great freedom on the design of the initiator and the catalyst is provided. Thus, the "atom transfer radical polymerization" is further more preferable as the method for producing the vinyl polymer having a specific functional group. Examples of the atom transfer radical polymerization method include methods by Matyjaszewski et al., disclosed in Journal of American Chemical Society (J. Am. Chem. Soc.) 1995, 117, 5614, Macromolecules 1995, 28, 7901, Science, 1996, 272, 866, and PCT Publication Nos. WO96/30421, WO97/18247, WO98/01480, and WO98/40415; and methods by Sawamoto et al., disclosed in Macromolecules 1995, 28, 1721 and Japanese Unexamined Patent Application Publication Nos. 9-208616 and 8-41117.

The atom transfer radical polymerization of the present invention also includes reverse atom transfer radical polymerization. In the reverse atom transfer radical polymerization, a conventional radical initiator, such as a peroxide, is allowed to act on an ordinary atom transfer radical polymerization catalyst in the higher oxidative state caused by generation of radicals, for example, on Cu (II') when Cu (I) is used as a catalyst, thus producing the same equilibrium as that in atom transfer radical polymerization (refer to Macromolecules 1999, 32, 2872).

In the present invention; among these living radical polymerization methods, any method may be used. Preferably, atom transfer radical polymerization is used.

Living radical polymerization methods will be described below.

First, a method in which a radical scavenger, such as a nitroxide compound, is used will be described. In this polymerization method, a nitroxy free radical (=N-O·), which is generally stable, is used as a radical capping agent. Preferred examples include, but are not limited to, nitroxy free radicals derived from cyclic hydroxyamines, such as 2,2,6,6-substituted-1-piperidinyloxy radicals and 2,2,5,5-substituted-1-pyrrolidinyloxy radicals. As the substituent, an alkyl group having not more than 4 carbon atoms, such as a methyl group or ethyl group is suitable. Specific examples of the nitroxy free radical compounds include, but are not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical and N,N-di-tert-butylamine-oxy radical. Instead of nitroxy free radicals, other stable free radicals, such as galvinoxyl free radical, may be used.

The radical capping agent is used in combination with a radical generator. It is considered that a reaction product from the radical capping agent and the radical generator serves as a polymerization initiator to allow the polymerization of addition-polymerizable monomers to proceed. Although the ratio between both is not particularly limited, the radical initiator is suitably used in an amount of 0.1 to 10 moles per mole of the radical capping agent.

Various compounds can be used as the radical generator. A peroxide capable of generating a radical under polymerization temperature conditions is preferably used. Examples of the peroxide include, but are not limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl) peroxydicarbonate; and alkyl peresters, such as tert-butyl peroxyoctoate and tert-butyl peroxybenzoate. In particular, benzoyl peroxide is preferred. Furthermore, instead of peroxides, other radical generators, such as radical-generating azo compounds, e.g., azobisisobutyronitrile, may be used.

As reported in Macromolecules 1995, 28, 2993, instead of combined use of a radical capping agent and a radical generator, alkoxyamine compounds such as those illustrated below may be used as initiators.

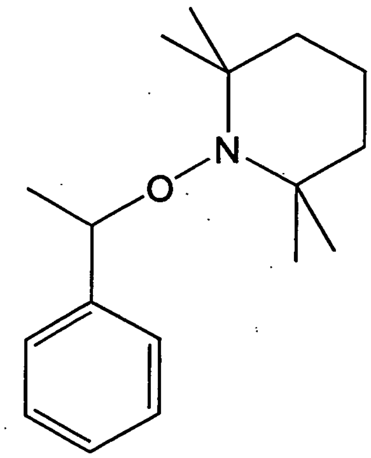 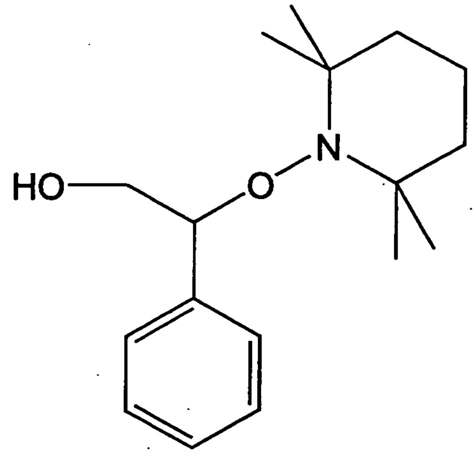

When an alkoxyamine compound is used as the initiator and the compound has a functional group, such as a hydroxyl group, such as the one illustrated above, a functional group-terminated polymer is obtained. By using this method in the present invention, a functional group-terminated polymer is obtained.

The polymerization conditions, such as the monomer, solvent, and polymerization temperature, used in the polymerization method using the radical scavenger, such as a nitroxide compound, are not particularly limited, but may be the same as those used in the atom transfer radical polymerization which will be described below.

Atom transfer radical polymerization

The atom transfer radical polymerization method, which is more preferable as the living radical polymerization of the present invention, will now be described.

In the atom transfer radical polymerization, an organic halide, in particular, an organic halide having a highly reactive carbon-halogen bond (e.g., a carbonyl compound having a halogen at the α-position or a compound having a halogen at the benzyl position), a halogenated sulfonyl compound, or the like is used as the initiator. Specific examples are as follows:

$$C_6H_5\text{-}CH_2X,\ C_6H_5\text{-}C(H)(X)CH_3,\ C_6H_5\text{-}C(X)(CH_3)_2$$

(in the above chemical formulae, $C_6H_5$ represents a phenyl group, and X represents a chlorine, bromine, or iodine atom);

$$R^3\text{-}C(H)(X)\text{-}CO_2R^4,\ R^3\text{-}C(CH_3)(X)\text{-}CO_2R^4,\ R^3\text{-}C(H)(X),\ \text{-}C(O)R^4,$$

$$R^3\text{-}C(CH_3)(X)\text{-}C(O)R^4$$

(in the above formulae, $R^3$ and $R^4$ each represent a hydrogen atom or an alkyl, aryl, or aralkyl group having 1 to 20 carbon atoms, and X represents a chlorine, bromine, or iodine atom);

$$R^3\text{-}C_6H_4\text{-}SO_2X$$

(in the above formula, $R^3$ represents a hydrogen atom or an alkyl, aryl, or aralkyl group having 1 to 20 carbon atoms, and X represents a chlorine, bromine, or iodine atom).

By atom transfer radical polymerization of a vinyl monomer using an organic halide or a halogenated sulfonyl compound as an initiator, a vinyl polymer having a terminal structure represented by general formula (1) is produced.

$$-C(R^1)(R^2)(X) \quad (1)$$

(In the formula, $R^1$ and $R^2$ each represent a group bonded to an ethylenically unsaturated group of a vinyl monomer, and X represents a chlorine, bromine, or iodine atom.)

An organic halide or a halogenated sulfonyl compound having a specific functional group which does not initiate polymerization in addition to a functional group which initiates polymerization may be used as the initiator in the atom transfer radical polymerization. In such a case, a vinyl polymer having the specific functional group at one terminus of the main chain and the terminal structure represented by general formula (1) at the other terminus of the main chain is produced. Examples of the specific functional group include an alkenyl group, a crosslinkable silyl group, a hydroxyl group, an epoxy group, an amino group, and an amide group.

The alkenyl group-containing organic halide is not particularly limited, and examples thereof include those having a structure represented by general formula (2).

$$R^6R^7C(X)-R^8-R^9-C(R^5)=CH_2 \quad (2)$$

(In the formula, $R^5$ represents a hydrogen atom or a methyl group; $R^6$ and $R^7$ each represent a hydrogen atom or a monovalent alkyl, aryl, or aralkyl group having 1 to 20 carbon atoms, and $R^6$ and $R^7$ may be bonded together at their respective free ends; $R^8$ represents -C(O)O- (ester group), -C(O)- (keto group), or an o-, m-, or p-phenylene group; $R^9$ represents a direct bond or a divalent organic group having 1 to 20 carbon atoms, which may contain one or more ether bonds; and X represents a chlorine, bromine, or iodine atom.)

Specific examples of each of the substituents $R^6$ and $R^7$ include a hydrogen atom, a methyl group, an ethyl group, an n-propyl group, an isopropyl group, a butyl group, a pentyl group, and a hexyl group. $R^6$ and $R^7$ may be bonded together at their respective free ends to form a cyclic skeleton.

Specific examples of the alkenyl group-containing organic halide represented by general formula (2) are as follows:

$$XCH_2C(O)O(CH_2)_nCH=CH_2,\ H_3CC(H)(X)C(O)O(CH_2)_nCH=CH_2,$$

$$(H_3C)_2C(X)C(O)O(CH_2)_nCH=CH_2,\ CH_3CH_2C(H)(X)C(O)O(CH_2)_nCH=CH_2,$$

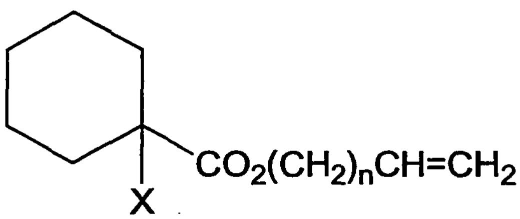

(in the above formulae, X represents a chlorine, bromine, or iodine atom, and n is an integer of 0 to 20);

$$XCH_2C(O)O(CH_2)_nO(CH_2)_mCH=CH_2,\ H_3CC(H)(X)C(O)O(CH_2)_nO(CH_2)_mCH=CH_2,$$

$$(H_3C)_2C(X)C(O)O(CH_2)_nO(CH_2)_mCH=CH_2,$$

$$CH_3CH_2C(H)(X)C(O)O(CH_2)_nO(CH_2)_mCH=CH_2,$$

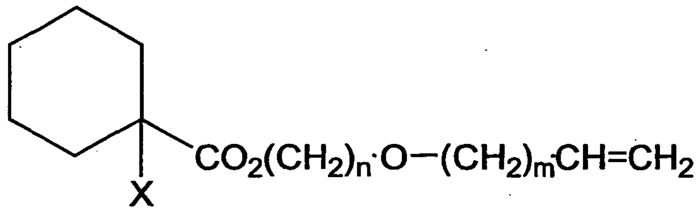

(in the above formulae, X represents a chlorine, bromine, or iodine atom, n is an integer of 1 to 20, and m is an integer of 0 to 20);

$$o, m, p\text{-}XCH_2\text{-}C_6H_4\text{-}(CH_2)_n\text{-}CH{=}CH_2,$$

$$o, m, p\text{-}CH_3C(H)(X)\text{-}C_6H_4\text{-}CH_2)_n\text{-}CH{=}CH_2,$$

$$o, m, p\text{-}CH_3CH_2C(H)(X)\text{-}C_6H_4\text{-}(CH_2)_n\text{-}CH{=}CH_2,$$

(in the above formulae, X represents a chlorine, bromine, or iodine atom, and n is an integer of 0 to 20);

$$o, m, p\text{-}XCH_2\text{-}C_6H_4\text{-}(CH_2)_n\text{-}O\text{-}(CH_2)_m\text{-}CH{=}CH_2,$$

$$o, m, p\text{-}CH_3C(H)(X)\text{-}C_6H_4\text{-}(CH_2)_n\text{-}O\text{-}(CH_2)_m\text{-}CH{=}CH_2,$$

$$o, m, p\text{-}CH_3CH_2C(H)(X)\text{-}C_6H_4\text{-}(CH_2)_n\text{-}O\text{-}(CH_2)_mCH{=}CH_2,$$

(in the above formulae, X represents a chlorine, bromine, or iodine atom, n is an integer of 1 to 20, and m is an integer of 0 to 20);

$$o, m, p\text{-}XCH_2\text{-}C_6H_4\text{-}O\text{-}(CH_2)_n\text{-}CH{=}CH_2,$$

$$o, m, p\text{-}CH_3C(H)(X)\text{-}C_6H_4\text{-}O\text{-}(CH_2)_n\text{-}CH{=}CH_2,$$

$$o,m,p\text{-}CH_3CH_2C(H)(X)\text{-}C_6H_4\text{-}O\text{-}(CH_2)_n\text{-}CH{=}CH_2,$$

(in the above formulae, X represents a chlorine, bromine, or iodine atom, and n is an integer of 0 to 20);

$$o, m, p\text{-}XCH_2\text{-}C_6H_4\text{-}O\text{-}(CH_2)_n\text{-}O\text{-}(CH_2)_m\text{-}CH{=}CH_2,$$

$$o, m, p\text{-}CH_3C(H)(X)\text{-}C_6H_4\text{-}O\text{-}(CH_2)_n\text{-}O\text{-}(CH_2)_m\text{-}CH{=}CH_2,$$

$$o, m, p\text{-}CH_3CH_2C(H)(X)\text{-}C_6H_4\text{-}O\text{-}(CH_2)_n\text{-}O\text{-}(CH_2)_m\text{-}CH{=}CH_2,$$

(in the above formulae, X represents a chlorine, bromine, or iodine atom, n is an integer of 1 to 20, and m is an integer of 0 to 20).

Examples of the alkenyl group-containing organic halide also include compounds represented by general formula (3).

$$H_2C{=}C(R^5)\text{-}R^9\text{-}C(R^6)(X)\text{-}R^{10}\text{-}R^7 \quad (3)$$

(In the formula, $R^5$, $R^6$, $R^7$, $R^9$, and X are the same as those described above, and $R^{10}$ represents a direct bond, -C(O)O-(ester group), -C(O)-(keto group), or an o-, m-, or p-phenylene group.)

$R^8$ represents a direct bond or a divalent organic group having 1 to 20 carbon atoms (which may contain one

or more ether bonds). When $R^8$ is a direct bond, the halide is an allyl halide in which a vinyl group is bonded to the carbon atom to which a halogen is bonded. In such a case, since the carbon-halogen bond is activated by the neighboring vinyl group, $R^{10}$ is not necessarily a C(O)O group, a phenylene group, or the like, and may be a direct bond. When $R^9$ is not a direct bond, $R^{10}$ is preferably a C(O)O group, a C(O) group, or a phenylene group so that the carbon-halogen bond is activated.

Specific examples of the compound represented by general formula (3) are as follows:

$CH_2{=}CHCH_2X$, $CH_2{=}C(CH_3)CH_2X$, $CH_2{=}CHC(H)(X)CH_3$,

$CH_2{=}C(CH_3)C(H)(X)CH_3$, $CH_2{=}CHC(X)(CH_3)_2$, $CH_2{=}CHC(H)(X)C_2H_5$,

$CH_2{=}CHC(H)(X)CH(CH_3)_2$, $CH_2{=}CHC(H)(X)C_6H_5$, $CH_2{=}CHC(H)(X)CH_2C_6H_5$,

$CH_2{=}CHCH_2C(H)(X)\text{-}CO_2R$, $CH_2{=}CH(CH_2)_2C(H)(X)\text{-}CO_2R$,

$CH_2{=}CH(CH_2)_3C(H)(X)\text{-}CO_2R$, $CH_2{=}CH(CH_2)_8C(H)(X)\text{-}CO_2R$,

$CH_2{=}CHCH_2C(H)(X)\text{-}C_6H_5$, $CH_2{=}CH(CH_2)_2C(H)(X)\text{-}C_6H_5$,

$CH_2{=}CH\ (CH_2)_3C(H)(X)\text{-}C_6H_5$,

(in the above formulae, X represents a chlorine, bromine, or iodine atom, and R represents an alkyl, aryl, or aralkyl group having 1 to 20 carbon atoms).

Specific examples of the alkenyl group-containing halogenated sulfonyl compound are as follows:

o-, m-, p-$CH_2{=}CH\text{-}(CH_2)_n\text{-}C_6H_4\text{-}SO_2X$,

o-, m-, p-$CH_2{=}CH\text{-}(CH_2)_n\text{-}O\text{-}C_6H_4\text{-}SO_2X$,

(In the above formulae, X represents a chlorine, bromine, or iodine atom, and n is an integer of 0 to 20.)

The crosslinkable silyl group-containing organic halide is not particularly limited, and examples thereof include a compound having a structure represented by general formula (4) :

$$R^6R^7C(X)\text{-}R^8\text{-}R^9\text{-}C(H)(R^5)CH_2\text{-}[Si(R^{11})_{2\text{-}b}(Y)_bO]_m\text{-}Si(R^{12})_{3\text{-}a}(Y)_a \qquad (4)$$

(In the formula, $R^5$, $R^6$, $R^7$, $R^8$, $R^9$, and X are the same as those described above; $R^{11}$ and $R^{12}$ each represent an alkyl, aryl, or aralkyl group having 1 to 20 carbon atoms, or a triorganosiloxy group represented by $(R')_3SiO$- (wherein R' represents a monovalent hydrocarbon group having 1 to 20 carbon atoms, and three R's may be the same or different); when two or more $R^{11}$s or $R^{12}$s are present, they may be the same or different; Y represents a hydroxyl group or a hydrolyzable group; when two or more Ys are present, they may be the same or different; a is 0, 1, 2, or 3; b is 0, 1, or 2; m is an integer of 0 to 19; and the relationship $a + mb \geq 1$ is satisfied.)

Specific examples of the compound represented by general formula (4) are as follows:

$XCH_2C(O)O(CH_2)_nSi(OCH_3)_3$, $CH_3C(H)(X)C(O)O(CH_2)nSi(OCH_3)_3$,

$(CH_3)_2C(X)C(O)O(CH_2)_nSi(OCH_3)_3$, $XCH_2C(O)O(CH_2)_nSi(CH_3)(OCH_3)_2$,

$CH_3C(H)(X)C(O)O(CH_2)_nSi(CH_3)(OCH_3)_2$,

$(CH_3)_2C(X)C(O)O(CH_2)_nSi(CH_3)(OCH_3)$,

(in the above formulae, X represents a chlorine, bromine, or iodine atom, and n is an integer of 0 to 20);

$$XCH_2C(O)O(CH_2)_nO(CH_2)_mSi(OCH_3)_3,$$

$$H_3CC(H)(X)C(O)O(CH_2)_nO(CH_2)_mSi(OCH_3)_3,$$

$$(H_3C)_2C(X)C(O)O(CH_2)_nO(CH_2)_mSi(OCH_3)_3,$$

$$CH_3CH_2C(H)(X)C(O)O(CH_2)_nO(CH_2)_mSi(OCH_3)_3,$$

$$XCH_2C(O)O(CH_2)_nO(CH_2)_mSi(CH_3)(OCH_3)_2,$$

$$H_3CC(H)(X)C(O)O(CH_2)_nO(CH_2)_m\text{-}Si(CH_3)(OCH_3)_2,$$

$$(H_3C)_2C(X)C(O)O(CH_2)_nO(CH_2)_m\text{-}Si(CH_3)(OCH_3)_2,$$

$$CH_3CH_2C(H)(X)C(O)O(CH_2)_nO(CH_2)_m\text{-}Si(CH_3)(OCH_3)_2,$$

(in the above formulae, X represents a chlorine, bromine, or iodine atom, n is an integer of 1 to 20, and m is an integer of 0 to 20);

$$o, m, p\text{-}XCH_2\text{-}C_6H_4\text{-}(CH_2)_2Si(OCH_3)_3,$$

$$o, m, p\text{-}CH_3C(H)(X)\text{-}C_6H_4\text{-}(CH_2)_2Si(OCH_3)_3,$$

$$o, m, p\text{-}CH_3CH_2C(H)(X)\text{-}C_6H_4\text{-}(CH_2)_2Si(OCH_3)_3,$$

$$o, m, p\text{-}XCH_2\text{-}C_6H_4\text{-}(CH_2)_3Si(OCH_3)_3,$$

$$o, m, p\text{-}CH_3C(H)(X)\text{-}C_6H_4\text{-}(CH_2)_3Si(OCH_3)_3,$$

$$o, m, p\text{-}CH_3CH_2C(H)(X)\text{-}C_6H_4\text{-}(CH_2)_3Si(OCH_3)_3,$$

$$o, m, p\text{-}XCH_2\text{-}C_6H_4\text{-}(CH_2)_2\text{-}O\text{-}(CH_2)_3Si(OCH_3)_3,$$

$$o, m, p\text{-}CH_3C(H)(X)\text{-}C_6H_4\text{-}(CH_2)_2\text{-}O\text{-}(CH_2)_3Si(OCH_3)_3,$$

$$o, m, p\text{-}CH_3CH_2C(H)(X)\text{-}C_6H_4\text{-}(CH_2)_2\text{-}O\text{-}(CH_2)_3Si(OCH_3)_3,$$

$$o, m, p\text{-}XCH_2\text{-}C_6H_4\text{-}O\text{-}(CH_2)_3Si(OCH_3)_3,$$

$$o, m, p\text{-}CH_3C(H)(X)\text{-}C_6H_4\text{-}O\text{-}(CH_2)_3Si(OCH_3)_3,$$

$$o, m, p\text{-}CH_3CH_2C(H)(X)\text{-}C_6H_4\text{-}O\text{-}(CH_2)_3\text{-}Si(OCH_3)_3,$$

$$o, m, p\text{-}XCH_2\text{-}C_6H_4\text{-}O\text{-}(CH_2)_2\text{-}O\text{-}(CH_2)_3\text{-}Si(OCH_3)_3,$$

$$o, m, p\text{-}CH_3C(H)(X)\text{-}C_6H_4\text{-}O\text{-}(CH_2)_2\text{-}O\text{-}(CH_2)Si(OCH_3)_3, \text{ and}$$

$$o, m, p\text{-}CH_3CH_2C(H)(X)\text{-}C_6H_4\text{-}O\text{-}(CH_2)_2\text{-}O\text{-}(CH_2)_3Si(OCH_3)_3,$$

(in the above formulae, X represents a chlorine, bromine, or iodine atom).

Examples of the crosslinkable silyl group-containing organic halide also include a compound having a structure represented by general formula (5).

$$(R^{12})_{3-a}(Y)_aSi\text{-}[OSi(R^{11})_{2-b}(Y)_b]_m\text{-}CH_2\text{-}C(H)(R^5)\text{-}R^9\text{-}C(R^6)(X)\text{-}R^{10}\text{-}R^7 \qquad (5)$$

(In the formula, $R^5$, $R^7$, $R^8$, $R^9$, $R^{10}$, $R^{11}$, $R^{12}$, a, b, m, X, and Y are the same as those described above.)

Specific examples of such a compound are as follows:

$(CH_3O)_3SiCH_2CH_2C(H)(X)C_6H_5$, $(CH_3O)_2(CH_3)SiCH_2CH_2C(H)(X)C_6H_5$,

$(CH_3O)_3Si(CH_2)_2C(H)(X)\text{-}CO_2R$, $(CH_3O)_2(CH_3)Si(CH_2)_2C(H)(X)\text{-}CO_2R$,

$(CH_3O)_3Si(CH_2)_3C(H)(X)\text{-}CO_2R(CH_3O)_2(CH_3)Si(CH_2)_3C(H)(X)\text{-}CO_2R$,

$(CH_3O)_3Si(CH_2)_4C(H)(X)\text{-}CO_2R$, $(CH_3O)_2(CH_3)Si(CH_2)_4C(H)(X)\text{-}CO_2R$,

$(CH_3O)_3Si(CH_2)_9C(H)(X)\text{-}CO_2R$, $(CH_3O)_2(CH_3)Si(CH_2)_9C(H)(X)\text{-}CO_2R$,

$(CH_3O)_3Si(CH_2)_3C(H)(X)\text{-}C_6H_5$, $(CH_3O)_2(CH_3)Si(CH_2)_3C(H)(X)\text{-}C_6H_5$,

$(CH_3O)_3Si(CH_2)_4C(H)(X)\text{-}C_6H_5$, and

$(CH_3O)_2(CH_3)Si(CH_2)_4C(H)(X)\text{-}C_6H_5$,

(in the above formulae, X represents a chlorine, bromine, or iodine atom, and R represents an alkyl, aryl, or aralkyl group having 1 to 20 carbon atoms).

The hydroxyl group-containing organic halide or halogenated sulfonyl compound is not particularly limited, and examples thereof include a compound represented by the following formula.

$$HO\text{-}(CH_2)_n\text{-}OC(O)C(H)(R)(X)$$

(In the above formula, X represents a chlorine, bromine, or iodine atom, R represents a hydrogen atom or an alkyl, aryl, or aralkyl group having 1 to 20 carbon atoms, and n is an integer of 1 to 20.)

The amino group-containing organic halide or halogenated sulfonyl compound is not particularly limited, and examples thereof include a compound represented by the following formula.

$$H_2N\text{-}(CH_2)_n\text{-}OC(O)C(H)(R)(X)$$

(In the above formula, X represents a chlorine, bromine, or iodine atom, R represents a hydrogen atom or an alkyl, aryl, or aralkyl group having 1 to 20 carbon atoms, and n is an integer of 1 to 20.)

The epoxy group-containing organic halide or halogenated sulfonyl compound is not particularly limited, and examples thereof include a compound represented by the following formula.

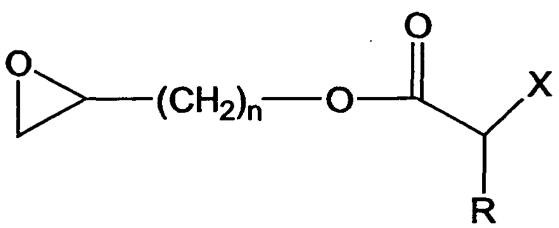

(In the above formula, X represents a chlorine, bromine, or iodine atom, R represents a hydrogen atom or an alkyl, aryl, or aralkyl group having 1 to 20 carbon atoms, and n is an integer of 1 to 20.)

In order to produce a polymer having at least two terminal structures of the present invention per molecule, preferably, an organic halide or halogenated sulfonyl compound having at least two initiation sites is used as an initiator. Specific examples thereof are as follows:

$$o,m,p\text{-}X\text{—}CH_2\text{—}C_6H_4\text{-}CH_2\text{—}X$$

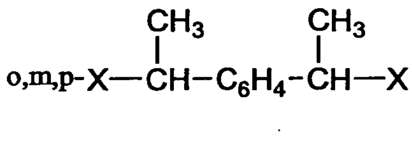
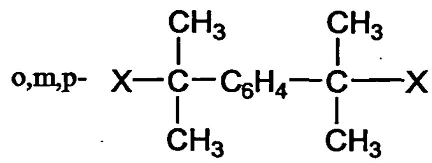

(in the formulae, $C_6H_4$ is a phenylene group, and X represents a chlorine, bromine, or iodine atom);

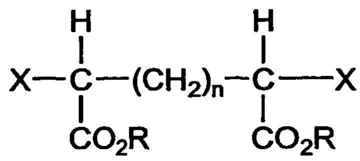
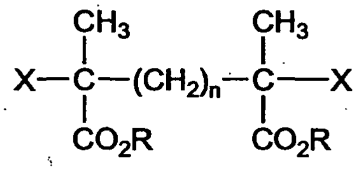

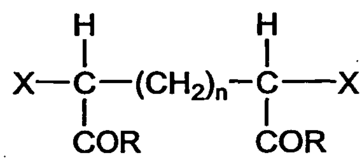
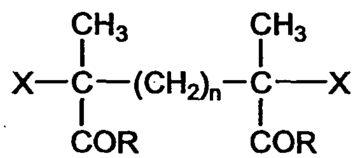

(in the formulae, R represents an alkyl, aryl, or aralkyl group having 1 to 20 carbon atoms, n is an integer of 0 to 20, and X represents a chlorine, bromine, or iodine atom);

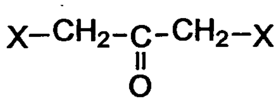
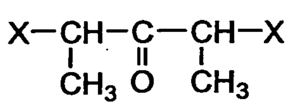
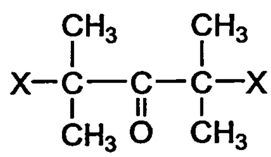

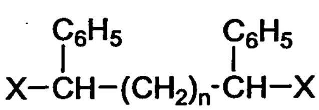

(in the formulae, X represents a chlorine, bromine, or iodine atom, and n is an integer of 0 to 20);

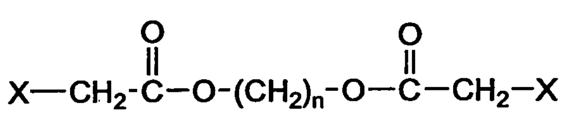

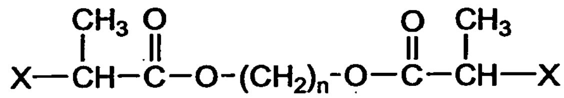

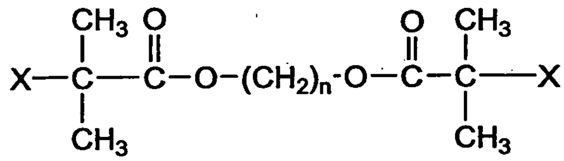

(in the formulae, n is an integer of 1 to 20, and X represents a chlorine, bromine, or iodine atom);

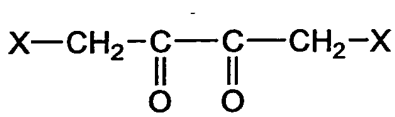

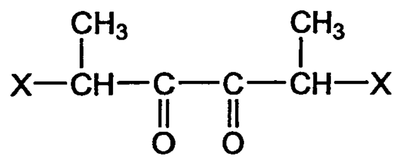

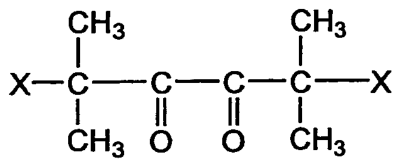

o,m,p−
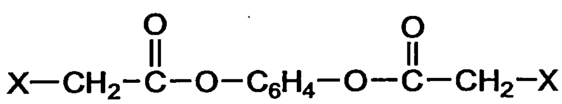

o,m,p−
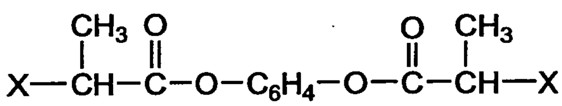

o,m,p−
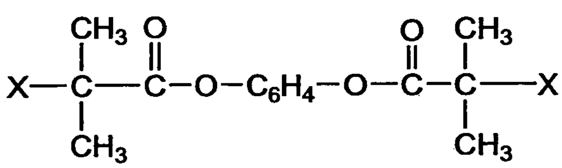

o,m,p− $X-SO_2-C_6H_4-SO_2-X$

(in the formulae, X represents a chlorine, bromine, or iodine atom).

The vinyl monomer used in the polymerization is not particularly limited, and all of the vinyl monomers exemplified above can be suitably used.

The transition metal complex used as the polymerization catalyst is not particularly limited, but preferably is a metal complex with an element selected from Groups 7, 8, 9, 10, and 11 of the periodic table as the central metal. More preferred are complexes of zero-valent copper, monovalent copper, divalent ruthenium, divalent iron, and divalent

nickel. Among them, copper complexes are preferable. Specific examples of the monovalent copper compound include cuprous chloride, cuprous bromide, cuprous iodide, cuprous cyanide, cuprous oxide, and cuprous perchlorate. When a copper compound is used, in order to enhance the catalytic activity, 2,2'-bipyridyl or a derivative thereof, 1,10-phenanthroline or a derivative thereof, or a polyamine, such as tetramethylethylenediamine, pentamethyldiethylenetriamine, or hexamethyltris(2-aminoethyl)amine, is added as a ligand. A complex of divalent ruthenium chloride and tristriphenylphosphine ($RuCl_2(PPh_3)_3$) is also suitable as the catalyst. When a ruthenium compound is used as the catalyst, an aluminum alkoxide is added as an activator. Furthermore, a complex of divalent iron and bistriphenylphosphine ($FeCl_2(PPh_3)_2$), a complex of divalent nickel and bistriphenylphosphine ($NiCl_2(PPh_3)_2$), or a complex of divalent nickel and bistributylphosphine ($NiBr_2(PBu_3)_2$) is also suitable as the catalyst.

The polymerization reaction may be carried out in the absence of a solvent or in the presence of various types of solvent. Examples of the solvent which may be used include, but are not limited to, hydrocarbon solvents, such as benzene and toluene; ether solvents, such as diethyl ether, tetrahydrofuran, diphenyl ether, anisole, and dimethoxybenzene; halogenated hydrocarbon solvents, such as methylene chloride, chloroform, and chlorobenzene; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; carbonate solvents, such as ethylene carbonate and propylene carbonate; and amide solvents, such as N,N-dimethylformamide and N,N-dimethylacetamide. These solvents may be used alone or in combination. The polymerization may also be carried out in an emulsion system or in a system using supercritical fluid $CO_2$ as a medium.

The polymerization can be carried out in a range of 0°C to 200°C, although not limited thereto, and preferably in a range of room temperature to 150°C.

<Hydrosilylatable alkenyl group>

Alkenyl group

In the present invention, the alkenyl group is preferably that represented by general formula (7), although not limited thereto.

$$H_2C=C(R^{13})- \qquad (7)$$

(wherein $R^{13}$ represents a hydrogen atom or an organic group having 1 to 20 carbon atoms.)

In general formula (7), $R^{13}$ represents a hydrogen atom or an organic group having 1 to 20 carbon atoms. The organic group having 1 to 20 carbon atoms is not particularly limited, but is preferably an alkyl group having 1 to 20 carbon atoms, an aryl group having 6 to 20 carbon atoms, or an aralkyl group having 7 to 20 carbon atoms. Specific examples are as follows:

$$-(CH_2)_n-CH_3,\ -CH(CH_3)-(CH_2)_n-CH_3,\ -CH(CH_2CH_3)-(CH_2)_n-CH_3,$$

$$-CH(CH_2CH_3)_2,\ -C(CH_3)_2-(CH_2)_n-CH_3,\ -C(CH_3)(CH_2CH_3)-(CH_2)_n-CH_3,$$

$$-C_6H_5,\ -C_6H_4(CH_3),\ -C_6H_3(CH_3)_2,\ -(CH_2)_n-C_6H_5,\ -(CH_2)_n-C_6H_4(CH_3),$$

$$-(CH_2)_n-C_6H_3(CH_3)_2$$

(wherein n is an integer of 0 or more, and the total number of carbon atoms in each group is not more than 20.)

Among them, a hydrogen atom or a methyl group is more preferred as $R^{13}$.

Furthermore, preferably, the alkenyl group of the polymer (I) is not activated by a carbonyl group, an alkenyl group, or an aromatic ring which is conjugated with the carbon-carbon double bond thereof.

The form of bonding between the alkenyl group and the main chain of the polymer is not particularly limited. Preferably, the alkenyl group and the main chain are bonded to each other by a carbon-carbon bond, an ester bond, an ether bond, a carbonate bond, an amide bond, a urethane bond, or the like.

Position of alkenyl group

When the cured object obtained from the curable composition of the present invention is required to have

rubber-like properties, preferably, at least one alkenyl group is positioned at a terminus of the molecular chain because the molecular weight between crosslinking points, which greatly affects rubber elasticity, can be increased. More preferably, all alkenyl groups are positioned at the termini of the molecular chain.

Methods for producing vinyl polymers, in particular, (meth)acrylic polymers, having at least one alkenyl group at a molecular terminus thereof are disclosed in Japanese Examined Patent Application Publication Nos. 3-14068 and 4-55444, Japanese Unexamined Patent Application Publication No. 6-211922, etc. Since these methods are free radical polymerization methods in which the above-described "chain transfer polymerization" is performed, the resulting polymers generally have a broad molecular-weight distribution of 2 or more and a high viscosity although they have alkenyl groups at the termini of the molecular chains in relatively high proportions. Therefore, in order to obtain a vinyl polymer having a narrow molecular-weight distribution and a low viscosity and having alkenyl groups at the termini of the molecular chain in high proportions, the above-described "living radical polymerization" is preferably used.

The alkenyl group of the present invention will be described below.

<Alkenyl group introduction method>

Methods for introducing the alkenyl group into the vinyl polymer will be described below. However, it is to be understood that the present invention is not limited thereto.

Method for introducing alkenyl group

(A-a) Method in which a compound having both a polymerizable alkenyl group and an alkenyl group with low polymerizability per molecule, such as the one represented by general formula (9) below, is used as a second monomer to perform radical polymerization, preferably living radical polymerization, for synthesizing a vinyl polymer.

$$H_2C=C(R^{14})-R^{15}-R^{16}-C(R^{17})=CH_2 \qquad (9)$$

(wherein $R^{14}$ represents a hydrogen atom or a methyl group; $R^{15}$ represents -C(O)O- or an o-, m-, or p-phenylene group; $R^{16}$ represents a direct bond or a divalent organic group having 1 to 20 carbon atoms, which may contain one or more ether bonds; and $R^{17}$ represents a hydrogen atom or an organic group having 1 to 20 carbon atoms.)

In general formula (9), $R^{17}$ represents a hydrogen atom or an organic group having 1 to 20 carbon atoms. The organic group having 1 to 20 carbon atoms is not particularly limited, but is preferably an alkyl group having 1 to 20 carbon atoms, an aryl group having 6 to 20 carbon atoms, or an aralkyl group having 7 to 20 carbon atoms. Specific examples thereof are as follows:

$$-(CH_2)_n-CH_3,\ -CH(CH_3)-(CH_2)_n-CH_3,\ -CH(CH_2CH_3)-(CH_2)_n-CH_3,$$

$$-CH(CH_2CH_3)_2,\ -C(CH_3)_2-(CH_2)_n-CH_3,\ -C(CH_3)(CH_2CH_3)-(CH_2)_n-CH_3,$$

$$-C_6H_5,\ -C_6H_4(CH_3),\ -C_6H_3(CH_3)_2,\ -(CH_2)_n-C_6H_5,\ -(CH_2)_n-C_6H_4(CH_3),$$

$$-(CH_2)_n-C_6H_3(CH_3)_2$$

(wherein n is an integer of 0 or more, and the total number of carbon atoms in each group is not more than 20.)

Among them, a hydrogen atom or a methyl group is more preferred as $R^{17}$.

The timing of subjecting the compound having both a polymerizable alkenyl group and an alkenyl group with low polymerizability per molecule to reaction is not particularly limited. However, when rubber-like properties are expected in living radical polymerization in particular, such a compound is preferably subjected to reaction as the second monomer at the final stage of the polymerization reaction or after the completion of reaction of a predetermined monomer.

(A-b) Method in which a compound having at least two alkenyl groups with low polymerizability, e.g., 1,5-hexadiene, 1,7-octadiene, or 1,9-decadiene, is subjected to reaction at the final stage of the polymerization reaction or after the completion of reaction of a predetermined monomer in the synthesis of a vinyl polymer by living radical polymerization.

(A-c) Method in which a vinyl polymer having at least one highly reactive carbon-halogen bond is allowed to react with an alkenyl group-containing organometallic compound, e.g., an organotin such as allyltributyltin or allyltrioctyltin, for substitution of the halogen.

(A-d) Method in which a vinyl polymer having at least one highly reactive carbon-halogen bond is allowed to react with a stabilized, alkenyl group-containing carbanion, such as the one represented by general formula (10), for substitution of the halogen.

$$M^+C^-(R^{18})(R^{19})\text{-}R^{20}\text{-}C(R^{17})=CH_2 \qquad (10)$$

(wherein $R^{17}$ is the same as that described above; $R^{18}$ and $R^{19}$ each represent an electron-attracting group for stabilizing the carbanion $C^-$, or one of $R^{18}$ and $R^{19}$ represents the electron-attracting group and the other represents a hydrogen atom, an alkyl group having 1 to 10 carbon atoms, or a phenyl group; $R^{20}$ represents a direct bond or a divalent organic group having 1 to 10 carbon atoms, which may contain one or more ether bonds; and $M^+$ represents an alkali metal ion or a quaternary ammonium ion.)

Examples of the electron-attracting groups represented $R^{18}$ and $R^{19}$ include $-CO_2R$ (ester group), -C(O)R (keto group), $-CON(R_2)$ (amide group), -COSR (thioester group), -CN (nitrile group), and $-NO_2$ (nitro group). Among them, $-CO_2R$ -C(O)R, and -CN are particularly preferable. The substituent R is an alkyl group having 1 to 20 carbon atoms, an aryl group having 6 to 20 carbon atoms, or an aralkyl group having 7 to 20 carbon atoms, and preferably an alkyl group having 1 to 10 carbon atoms or a phenyl group.

(A-e) Method comprising treating a vinyl polymer having at least one highly reactive carbon-halogen bond with an elemental metal, such as zinc, or an organometallic compound to prepare an enolate anion, and then allowing the enolate anion to react with an alkenyl group-containing electrophilic compound, e.g., an alkenyl group-containing compound having a leaving group, such as a halogen or an acetyl group, an alkenyl group-containing carbonyl compound, an alkenyl group-containing isocyanate compound, or an alkenyl group-containing acid halide.

(A-f) Method in which a vinyl polymer having at least one highly reactive carbon-halogen bond is allowed to react with an alkenyl group-containing oxy anion or carboxylate anion, such as the one represented by general formula (11) or (12), for substitution of the halogen.

$$H_2C=C(R^{17})\text{-}R^{21}\text{-}O^-M^+ \qquad (11)$$

(wherein $R^{17}$ and $M^+$ are the same as those described above, and $R^{21}$ represents a divalent organic group having 1 to 20 carbon atoms, which may contain one or more ether bonds.)

$$H_2C=C(R^{17})\text{-}R^{22}\text{-}C(O)O^-M^+ \qquad (12)$$

(wherein $R^{17}$ and $M^+$ are the same as those described above, and $R^{22}$ represents a direct bond or a divalent organic group having 1 to 20 carbon atoms, which may contain one or more ether bonds.)

In the present invention, in the method for introducing the alkenyl group in which a halogen is not directly involved, such as the method (A-a) or (A-b), the vinyl polymer is synthesized preferably by living radical polymerization, and more preferably by atom transfer radical polymerization.

In the method in which a vinyl polymer having at least one highly reactive carbon-halogen bond is used, such as any one of the methods (A-c) to (A-f), the vinyl polymer having at least one highly reactive carbon-halogen bond is synthesized preferably by chain transfer polymerization using a halide as a chain transfer agent or atom transfer radical polymerization using an organic halide or a halogenated sulfonyl compound as an initiator, and more preferably by atom transfer radical polymerization.

Among the methods (A-a) to (A-f), in view that easier control is enabled, the methods (A-b) and (A-f) are preferred. The introduction methods (A-b) and (A-f) will be described below in detail.

Diene compound addition method [method (A-b)]

The method (a-b) is characterized in that a vinyl polymer prepared by living radical polymerization of a vinyl monomer is allowed to react with a compound having at least two alkenyl groups with low polymerizability (hereinafter referred as the "diene compound").

The at least two alkenyl groups in the diene compound may be the same or different. As the alkenyl group, either a terminal alkenyl group [$CH_2=C(R)-R'$, wherein R represents a hydrogen atom or an organic group having 1 to 20 carbon atoms; R' represents an organic group having 1 to 20 carbon atoms; and R and R' may be bonded to each other to form a cyclic structure], or an internal alkenyl group [R'-C(R)=C(R)-R', wherein R represents a hydrogen atom

or an organic group having 1 to 20 carbon atoms; R' represents an organic group having 1 to 20 carbon atoms; two Rs or two R's may be the same or different; and either two Rs or two R's may be bonded to each other to form a cyclic structure], may be used. The terminal alkenyl group is preferable. R represents a hydrogen atom or an organic group having 1 to 20 carbon atoms. As the organic group having 1 to 20 carbon atoms, an alkyl group having 1 to 20 carbon atoms, an aryl group having 6 to 20 carbon atoms, or an aralkyl group having 7 to 20 carbon atoms is preferable. Among them, a hydrogen atom or a methyl group is particularly preferable as R.

Among the alkenyl groups in the diene compound, at least two alkenyl groups may be conjugated.

Specific examples of the diene compound include isoprene, piperylene, butadiene, myrcene, 1,5-hexadiene, 1,7-octadiene, 1,9-decadiene, and 4-vinyl-1-cyclohexene. Preferred are 1,5-hexadiene, 1,7-octadiene, and 1,9-decadiene.

Another possible method comprises performing living radical polymerization of a vinyl monomer, isolating the resulting polymer from the polymerization system, and subjecting the isolated polymer and a diene compound to radical reaction to produce a desired alkenyl group-terminated vinyl polymer. However, the method in which a diene compound is added into the polymerization system at the final stage of the polymerization reaction or after the completion of reaction of a predetermined monomer is simple, thus being preferable.

The amount of the diene compound to be added must be adjusted depending on the radical reactivities of the alkenyl groups of the diene compound. When there is a large difference in reactivity between two alkenyl groups, the amount of the diene compound may be equivalent to or in slight excess of that of the propagating ends of the polymer. When the reactivities of the two alkenyl groups are equal to or substantially equal to each other, both of two alkenyl groups can react with different polymer molecules, resulting in coupling of the polymer ends. Therefore, the amount of the diene compound preferably exceeds that of the propagating ends of the polymer, in an amount preferably 1.5 times or more, more preferably 3 times or more, and particularly preferably 5 times or more.

Nucleophilic substitution method [method (A-f)]

The method (A-f) is characterized in that a vinyl polymer having at least one highly reactive carbon-halogen bond is allowed to react with an alkenyl group-containing oxy anion or carboxylate anion for substitution of the halogen.

The alkenyl group-containing oxy anion or carboxylate anion is not particularly limited. Examples thereof include those represented by general formula (11) or (12).

$$H_2C=C\ (R^{17})\text{-}R^{21}\text{-}O^{-}M^{+} \qquad (11)$$

(wherein $R^{17}$ and $M^+$ are the same as those described above, and $R^{21}$ represents a divalent organic group having 1 to 20 carbon atoms, which may contain one or more ether bonds.)

$$H_2C=C\ (R^{17})\text{-}R^{22}\text{-}C(O)O^{-}M^{+} \qquad (12)$$

(wherein $R^{17}$ and $M^+$ are the same as those described above, and $R^{22}$ represents a direct bond or a divalent organic group having 1 to 20 carbon atoms, which may contain one or more ether bonds.)

Specific examples of the oxy anion or carboxylate anion include ammonia; alkyl amines, such as trimethylamine, triethylamine, and tributylamine; polyamines, such as tetramethylethylenediamine and pentamethyldiethylenetriamine; and pyridine compounds, such as pyridine and picoline.

The amount of a basic compound used must be equivalent to or in slight excess of that of a precursor, and is preferably 1 to 1.2 equivalents.

Examples of the solvent used for the reaction between the precursor and the basic compound include salts of alkenyl alcohols, such as allyl alcohol; salts of allyloxy alcohols, such as ethylene glycol monoallyl ether; alkenyl group-containing phenolic hydroxysalts, such as allylphenol and allyloxyphenol; and alkenyl group-containing carboxylates, such as 10-undecylenate, 4-pentenoate, and vinyl acetate.

$M^+$ represents a counter cation. Examples of the counter cation include alkali metal ions, such as lithium ion, sodium ion, and potassium ion, and quaternary ammonium ions. Examples of the quaternary ammonium ion include tetramethylammonium ion, tetraethylammonium ion, tetrabenzylammonium ion, trimethyldodecylammonium ion, tetrabutylammonium ion, and dimethylpyperidinium ion. Preferred is sodium ion or potassium ion.

The amount of the oxy anion or carboxylate anion used must be in excess of that the halogen, and is preferably 1 to 5 equivalents, more preferably 1 to 2 equivalents, and still more preferably 1.0 to 1.2 equivalents.

The solvent used for the reaction is not particularly limited, but is preferably a solvent with relatively high

polarity. Examples thereof include ether solvents, such as diethyl ether, tetrahydrofuran, diphenyl ether, anisole, and dimethoxybenzene; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; carbonate solvents, such as ethylene carbonate and propylene carbonate; amide solvents, such as dimethylformamide and dimethylacetamide; and sulfoxide solvents such as dimethyl sulfoxide. These solvents may be used alone or in combination. Among them, polar solvents, such as acetone, dimethyl sulfoxide, dimethylformamide, dimethylacetamide, hexamethylphosphoric triamide, and acetonitrile, are preferable. The reaction temperature is not particularly limited, but is usually 0°C to 150°C, and preferably room temperature to 100°C.

Furthermore, as a reaction accelerator, an amine, an ammonium salt, a crown ether, or the like may be added to the reaction system.

Instead of using the oxy anion or carboxylate anion, an alcohol or carboxylic acid, which is the precursor, may be allowed to react with the base in the reaction system to prepare the oxy anion or carboxylate anion.

When an ester group is present in the side chain or the main chain of the vinyl polymer, an oxy anion with high nucleophilicity may possibly cause an ester interchange. Therefore, a carboxylate anion with low nucleophilicity is preferably used.

Method for converting hydroxyl group into alkenyl group

A vinyl polymer having at least one alkenyl group can also be obtained from a vinyl polymer having at least one hydroxyl group. Examples of the method therefor include, but are not limited to, the followings.

(A-g) Method comprising allowing a base, such as sodium methoxide, to act on the hydroxyl group of a vinyl polymer having at least one hydroxyl group, and further allowing the polymer to react with an alkenyl group-containing halide, such as allyl chloride.

(A-h) Method comprising allowing an alkenyl group-containing isocyanate compound, such as allyl isocyanate, to react with the hydroxyl group of a vinyl polymer having at least one hydroxyl group.

(A-i) Method comprising allowing an alkenyl group-containing acid halide, such as (meth)acrylic acid chloride, to react with the hydroxyl group of a vinyl polymer having at least one hydroxyl group in the presence of a base, such as pyridine.

(A-j) Method comprising allowing an alkenyl-group containing carboxylic acid, such as acrylic acid, to react with the hydroxyl group of a vinyl polymer having at least one hydroxyl group in the presence of an acid catalyst.

(A-k) Method comprising allowing a hydroxyl group-containing vinyl polymer to react with a diisocyanate compound, and allowing a compound having both an alkenyl group and a hydroxyl group to react with the residual isocyanato groups. The compound having both an alkenyl group and a hydroxyl group is not particularly limited. Examples thereof include alkenyl alcohols, such as 10-undecenol, 5-hexenol, and allyl alcohol.

The diisocyanate compound is not particularly limited, and any known diisocyanate compound may be used. Examples thereof include isocyanate compounds, such as toluylene diisocyanate, 4,4'-diphenylmethane diisocyanate, hexamethyl diisocyanate, xylylene diisocyanate, metaxylylene diisocyanate, 1,5-naphthalene diisocyanate, hydrogenated diphenylmethane diisocyanate, hydrogenated toluylene diisocyanate, hydrogenated xylylene diisocyanate, and isophorone diisocyanate. These may be used alone, or two or more of them may be used in combination. Blocked isocyanates may also be used.

In view of higher weatherability, preferably, a diisocyanate compound having no aromatic ring, such as hexamethylene diisocyanate or hydrogenated diphenylmethane diisocyanate, is used.

Method for synthesizing hydroxyl group-containing vinyl polymer

Examples of the method for producing the vinyl polymer having at least one hydroxyl group used in methods (B) and (A-g) to (A-j) include, but are not limited to, the followings.

(B-a) Method in which a compound having both a polymerizable alkenyl group and a hydroxyl group per molecule, such as the one represented by general formula (15), is used as a second monomer to perform radical polymerization for synthesizing a vinyl polymer.

$$H_2C=C(R^{14})-R^{15}-R^{16}-OH \quad (15)$$

(wherein $R^{14}$, $R^{15}$, and $R^{16}$ are the same as those described above.)

The timing of subjecting the compound having both a polymerizable alkenyl group and a hydroxyl group per molecule to reaction is not particularly limited. However, when rubber-like properties are expected in living radical polymerization in particular, such a compound is preferably subjected to reaction as the second monomer at the final stage of the polymerization reaction or after the completion of reaction of a predetermined monomer.

(B-b) Method in which an alkenyl alcohol, such as 10-undecenol, 5-hexenol, or allyl alcohol, is subjected to reaction at the final stage of the polymerization reaction or after the completion of reaction of a predetermined monomer in the synthesis of a vinyl polymer by living radical polymerization.

(B-c) Method comprising radically polymerizing a vinyl monomer using a large amount of a hydroxyl group-containing chain transfer agent, such as a hydroxyl group-containing polysulfide, for example, as described in Japanese Unexamined Patent Application Publication No. 5-262808.

(B-d) Method comprising radically polymerizing a vinyl monomer using hydrogen peroxide or a hydroxyl group-containing initiator, for example, as described in Japanese Unexamined Patent Application Publication No. 6-239912 or 8-283310.

(B-e) Method comprising radically polymerizing a vinyl monomer using an alcohol in excess, for example, as described in Japanese Unexamined Patent Application Publication No. 6-116312.

(B-f) Method in which the halogen of a vinyl polymer having at least one highly reactive carbon-halogen bond is subjected to hydrolysis or reaction with a hydroxyl group-containing compound to introduce a hydroxyl group into the terminus, for example, by a process described in Japanese Unexamined Patent Application Publication No. 4-132706.

(B-g) Method in which a vinyl polymer having at least one highly reactive carbon-halogen bond is allowed to react with a stabilized, hydroxyl group-containing carbanion, such as the one represented by general formula (16), for substitution of the halogen:

$$M^+C^-(R^{18})(R^{19})\text{-}R^{20}\text{-}OH \qquad (16)$$

(wherein $R^{18}$, $R^{19}$, and $R^{20}$ are the same as those described above).

Examples of the electron-attracting groups represented by $R^{18}$ and $R^{19}$ include $-CO_2R$ (ester group), $-C(O)R$ (keto group), $-CON(R_2)$ (amide group), $-COSR$ (thioester group), $-CN$ (nitrile group), and $-NO_2$ (nitro group). Among them, $-CO_2R$, $-C(O)R$, and $-CN$ are particularly preferable. The substituent R is an alkyl group having 1 to 20 carbon atoms, an aryl group having 6 to 20 carbon atoms, or an aralkyl group having 7 to 20 carbon atoms, and preferably an alkyl group having 1 to 10 carbon atoms or a phenyl group.

(B-h) Method comprising treating a vinyl polymer having at least one highly reactive carbon-halogen bond with an elemental metal, such as zinc, or an organometallic compound to prepare an enolate anion, and then allowing the enolate anion to react with an aldehyde or a ketone.

(B-i) Method in which a vinyl polymer having at least one highly reactive carbon-halogen bond is allowed to react with an hydroxyl group-containing oxy anion or carboxylate anion, such as the one represented by general formula (17) or (18), for substitution of the halogen:

$$HO\text{-}R^{21}\text{-}O^-M^+ \qquad (17)$$

(wherein $R^{21}$ and $M^+$ are the same as those described above),

$$HO\text{-}R^{22}\text{-}C(O)O^-M^+ \qquad (18)$$

(wherein $R^{22}$ and $M^+$ are the same as those described above).

With respect to $M^+$, reaction conditions, solvents, etc., those described in the method (A-f) can all be suitably used.

(B-j) Method in which a compound having both an alkenyl group with low polymerizability and a hydroxyl group per molecule, as a second monomer, is subjected to reaction at the final stage of the polymerization reaction or after the completion of reaction of a predetermined monomer in the synthesis of a vinyl polymer by living radical polymerization.

Such a compound is not particularly limited, and examples thereof include a compound represented by general formula (19).

$$H_2C{=}C(R^{14})\text{-}R^{21}\text{-}OH \quad (19)$$

(wherein $R^{14}$ and $R^{21}$ are the same as those described above.)

Although the compound represented by general formula (19) is not particularly limited, in view of availability, an alkenyl alcohol, such as 10-undecenol, 8-octenol, 5-hexenol, or allyl alcohol, is preferable.

In the present invention, in the method for introducing the hydroxyl group in which a halogen is not directly involved, such as any one of the methods (B-a) to (B-e) and (B-j), the vinyl polymer is synthesized preferably by living radical polymerization, and more preferably by atom transfer radical polymerization.

In the method in which a vinyl polymer having at least one highly reactive carbon-halogen bond is used, such as any one of the methods (B-f) to (B-i), the vinyl polymer having at least one highly reactive carbon-halogen bond is synthesized preferably by chain transfer polymerization using a halide as a chain transfer agent or atom transfer radical polymerization using an organic halide or a halogenated sulfonyl compound as an initiator, and more preferably by atom transfer radical polymerization.

Among the synthesis methods (B-a) to (B-j), in view that easier control is enabled, the methods (B-b) and (B-i) are preferred.

<<Hydrosilyl group-containing compound (II)>>

As the hydrosilyl group-containing compound, which is the component (B), any hydrosilyl group-containing compound which can be cured by crosslinking with the component (A), i.e., the vinyl polymer containing at least one alkenyl group, may be used without limitations. Examples thereof include linear polysiloxanes represented by general formula (22) or (23):

$$R^{23}_3SiO\text{-}[Si(R^{23})_2O]_a\text{-}[Si(H)(R^{24})O]_b\text{-}[Si(R^{24})(R^{25})O]_c\text{-}SiR^{23}_3 \quad (22)$$

$$HR^{23}_2SiO\text{-}[Si(R^{23})_2O]_a\text{-}[Si(H)(R^{24})O]_b\text{-}[Si(R^{24})(R^{25})O]_c\text{-}SiR^{23}_2H \quad (23)$$

(wherein $R^{23}$ and $R^{24}$ each represent an alkyl group having 1 to 6 carbon atoms or a phenyl group; $R^{25}$ represents an alkyl or aralkyl group having 1 to 10 carbon atoms; a is an integer satisfying the relationship $0 \le a \le 10$; b is an integer satisfying the relationship $2 \le b \le 100$; and c is an integer satisfying the relationship $0 \le c \le 100$.); and cyclic siloxanes represented by general formula (24):

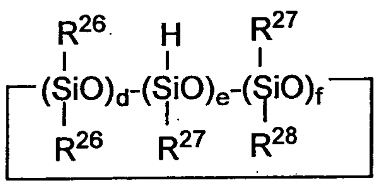

(24)

(wherein $R^{26}$ and $R^{27}$ each represent an alkyl group having 1 to 6 carbon atoms or a phenyl group; $R^{28}$ represents an alkyl or aralkyl group having 1 to 10 carbon atoms; d is an integer satisfying the relationship $0 \le d \le 8$, e is an integer satisfying the relationship $2 \le e \le 10$, and f is an integer satisfying the relationship $0 \le f \le 8$; and $3 \le d + e + f \le 10$).

These may be used alone or in combination. Among these siloxanes, in view of compatibility with (meth) acrylic polymers, preferred are phenyl group-containing linear siloxanes represented by general formula (25) or (26) and cyclic siloxanes represented by general formula (27) or (28).

$$(CH_3)_3SiO\text{-}[Si(H)(CH_3)O]_g\text{-}[Si(C_6H_5)_2O]_h\text{-}Si(CH_3)_3 \quad (25)$$

$$(CH_3)_3SiO\text{-}[Si(H)(CH_3)O]_g\text{-}[Si\ (CH_3)\{CH_2C(H)(R^{24})C_6H_5\}O]_h\text{-}Si(CH_3)_3 \quad (26)$$

(wherein $R^{24}$ represents a hydrogen atom or a methyl group; g is an integer satisfying the relationship $2 \leq g \leq 100$; h is an integer satisfying the relationship $0 \leq h \leq 100$; and $C_6H_5$ represents a phenyl group.)

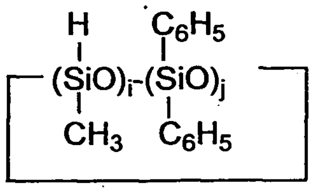

(27)

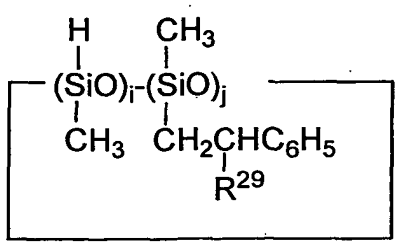

(28)

(wherein $R^{29}$ represents a hydrogen atom or a methyl group; i is an integer satisfying the relationship $2 \leq i \leq 10$, j is an integer satisfying the relationship $0 \leq j \leq 8$; $3 \leq i + i \leq 10$; and $C_6H_5$ represents a phenyl group.)

Further usable as the component (B), i.e., the compound containing at least one hydrosilyl group, is a compound produced by subjecting a low molecular weight compound containing at least two alkenyl groups per molecule to addition reaction with a hydrosilyl group-containing compound represented by any one of general formulae (22) to (28) such that the hydrosilyl group partially remains even after reaction. As the compound containing at least two alkenyl groups per molecule, various compounds can be used. Examples thereof include hydrocarbon compounds, such as 1,4-pentadiene, 1,5-hexadiene, 1,6-heptadiene, 1,7-octadiene, 1,8-nonadiene, and 1,9-decadiene; ether compounds, such as O,O'-diallyl bisphenol A and 3,3'-diallyl bisphenol A; ester compounds, such as diallyl phthalate, diallyl isophthalate, triallyl trimellitate, and tetraallyl pyromellitate; and carbonate compounds, such as diethylene glycol diallyl carbonate.

The above compounds can be produced by slowly adding dropwise the alkenyl group-containing compound described above to an excess of the hydrosilyl group-containing compound represented by any one of general formulae (22) (28) in the presence of a hydrosilylation catalyst. Among such compounds, in view of availability of raw materials, ease of removal of the siloxane used in excess, and compatibility with the vinyl polymer (I), the followings are preferred.

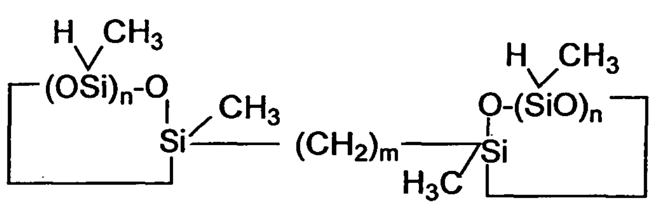

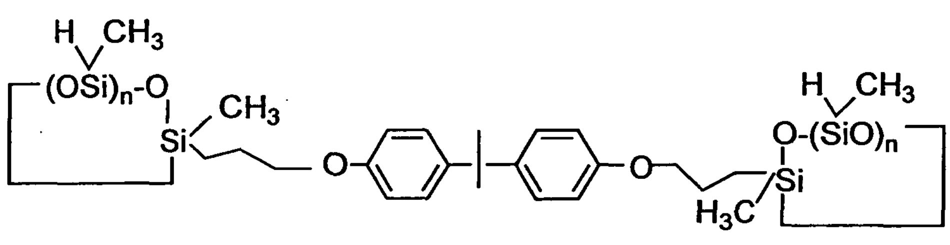

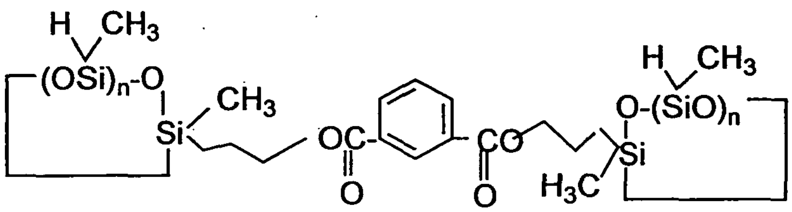

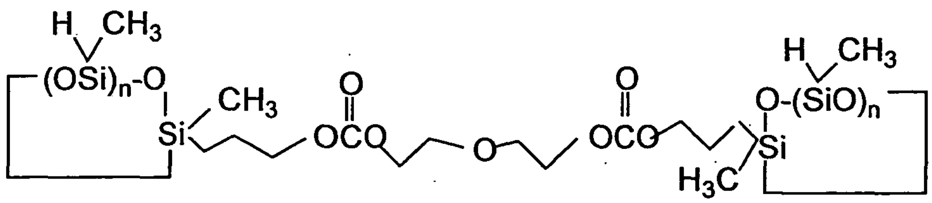

(wherein n is an integer of 2 to 4, and m is an integer of 5 to 10.)

<<(C) Hydrosilylation catalyst>>

The hydrosilylation catalyst, which is the component (C) of the present invention, is not particularly limited, and any hydrosilylation catalyst may be used. Specific examples thereof include chloroplatinic acid, elemental platinum, solid platinum dispersed on a support, such as alumina, silica, or carbon black; platinum-vinylsiloxane complexes, such as $Pt_n(ViMe_2SiOSiMe_2Vi)_n$ and $Pt[(MeViSiO)_4]_m$; platinum-phosphine complexes, such as $Pt(PPh_3)_4$ and $Pt(PBu_3)_4$; platinum-phosphite complexes, such as $Pt[P(OPh)_3]_4$ and $Pt[P(OBu)_3]_4$, (wherein Me represents a methyl group, Bu represents a butyl group, Vi represents a vinyl group, Ph represents a phenyl group, and n and m each represent an integer); $Pt(acac)_2$; platinum-hydrocarbon complexes described in US Patent Nos. 3,159,601 and 3,159,662 by Ashby et al.; and platinum-alcolate catalysts described in US Patent No. 3,220,972 by Lamoreaux et al.

Examples of the catalyst other than platinum compounds include $RhCl(PPh_3)_3$, $RhCl_3$, $Rh/Al_2O_3$, $RuCl_3$, $IrCl_3$, $FeCl_3$, $AlCl_3$, $PdCl_2 \cdot 2H_2O$, $NiCl_2$, and $TiCl_4$. These catalysts may be used alone or in combination. In view of catalytic activity, preferred are chloroplatinic acid, platinum-olefin complexes, platinum-vinylsiloxane complexes, $Pt(acac)_2$, etc. Although the amount of the catalyst is not particularly limited, the catalyst is used preferably in an amount of $10^{-1}$ to $10^{-8}$ mole, and more preferably $10^{-2}$ to $10^{-6}$ mole, per mole of the alkenyl group of the component (A). The hydrosilylation catalyst is generally expensive and corrosive and, in some cases, may generate a large amount of hydrogen gas, which causes foaming of the resulting cured object. Therefore, it is not preferred to use the hydrosilylation catalyst in an amount exceeding $10^{-1}$ mole.

<<(D) Metal soap>>

The metal soap, which is the component (D) of the present invention, is not particularly limited, and any metal soap may be used. Generally, a metal soap comprises a long-chain fatty acid bonded to a metal ion and includes a nonpolar or low-polarity portion based on the fatty acid and a polar portion based on the bond with the metal per molecule. Examples of the long-chain fatty acid include saturated fatty acid having 1 to 18 carbon atoms, unsaturated fatty acids having 3 to 18 carbon atoms, and aliphatic dicarboxylic acids. Among them, in view of availability, saturated fatty acids having 1 to 18 carbon atoms are preferable, and in view of mold release properties, saturated fatty acids having 6 to 18 carbon atoms are particularly preferable. Examples of the metal ion include ions of alkali metals, alkaline earth metals, zinc, cobalt, aluminum, and strontium. More specific examples of the metal soap include lithium stearate, lithium 12-hydroxystearate, lithium laurate, lithium oleate, lithium 2-ethylhexanoate, sodium stearate, sodium 12-hydroxystearate, sodium laurate, sodium oleate, sodium 2-ethylhexanoate, potassium stearate, potassium 12-hydroxystearate, potassium laurate, potassium oleate, potassium 2-ethylhexanoate, magnesium stearate, magnesium 12-hydroxystearate, magnesium laurate, magnesium oleate, magnesium 2-ethylhexanoate, calcium stearate, calcium 12-hydroxystearate, calcium laurate, calcium oleate, calcium 2-ethylhexanoate, barium stearate, barium 12-hydroxystearate, barium laurate, zinc stearate, zinc 12-hydroxystearate, zinc laurate, zinc oleate, zinc 2-ethylhexanoate, zinc stearate,

zinc 12-hydroxystearate, cobalt stearate, aluminum stearate, manganese oleate, and barium ricinolate. Among these metal soaps, in view of availability and safety, stearic acid metal salts are preferable, and in particular, in view of economics, at least one metal soap selected from the group consisting of calcium stearate, magnesium stearate, and zinc stearate is most preferable. Although the amount of the metal soap added is not particularly limited, the metal soap is used usually in an amount of 0.025 to 5 parts by weight, and preferably in an amount of 0.05 to 4 parts by weight, of 100 parts by weight of the component (A). If the amount of the metal soap added is too large, physical properties of the resulting cured object are degraded. If the amount is too small, desired mold release properties cannot be obtained.

<<(E) Reinforcing silica>>

As the reinforcing silica, which is the component (E) of the present invention, fumed silica, precipitated silica, or the like is used. Above all, silica having a particle size of 50 μm or less and a specific surface area of 80 $m^2/g$ or more is preferable, in view of reinforcing properties. Furthermore, surface-treated silica, for example, treated with organosilane, organosilazane, diorganocyclopolysiloxane, or the like, is more preferable because fluidity suitable for molding is easily obtained. More specific examples of the reinforcing silica include, but are not limited to, Aerogel, which is a fumed silica, of Japan Aerogel Co., Ltd., and Nipsil, which is a precipitated silica, of Nippon Silica Industrial Co., Ltd. The amount of the reinforcing silica to be added is not particularly limited. The reinforcing silica is used in an amount of 0.1 to 100 parts by weight, preferably 0.5 to 80 parts by weight, and more preferably 1 to 50 parts by weight, relative to the component (A). If the amount of the reinforcing silica added is less than 0.1 parts by weight, improvement in reinforcing properties may become insufficient. If the amount exceeds 100 parts by weight, workability of the curable composition may be degraded. The reinforcing silica of the present invention may be used alone or in combination.

<<Curable composition>>

In order to adjust physical properties, various types of additive, for example, flame retardants, antioxidants, fillers, plasticizers, curability-adjusting agents, physical property-adjusting agents, adhesion-imparting agents, storage stability-improving agents, solvents, radical inhibitors, metal deactivators, antiozonants, phosphorus-containing peroxide decomposers, lubricants, pigments, foaming agents, and photo-curable resins, may be appropriately compounded with the curable composition of the present invention as required. These various additives may be used alone or in combination.

Since vinyl polymers are originally highly durable, antioxidants are not necessarily required. However, known antioxidants, ultraviolet absorbers, light stabilizers, etc., can be used as appropriate.

<Filler>

In addition to the reinforcing silica, which is the component (E), various fillers may be added to the curable composition of the present invention. Examples of the filler include, but are not limited to, reinforcing fillers, such as wood flour, pulp, cotton chip, asbestos, glass fibers, carbon fibers, mica, walnut shell flour, chaff flour, graphite, diatomaceous earth, china clay, silicas (fumed silica, precipitated silica, crystalline silica, fused silica, dolomite, silicic acid anhydride, silicic acid hydrate, etc.), and carbon black; fillers, such as heavy calcium carbonate, ground calcium carbonate, magnesium carbonate, diatomaceous earth, calcined clay, clay, talc, titanium oxide, bentonite, organic bentonite, ferric oxide, red iron oxide, fine aluminum powder, flint powder, zinc oxide, active zinc white, zinc powder, zinc carbonate, and Shirasu balloons; and fibrous fillers, such as asbestos, glass fibers, glass filaments, carbon fibers, Kevlar fibers, and polyethylene fibers.

Among these fillers, preferred are precipitated silica, fumed silica, crystalline silica, fused silica, dolomite, carbon black, calcium carbonate, titanium oxide, talc, and the like.

In particular, in order to produce cured objects having high strength using fillers, a filler mainly selected from the group consisting of fumed silica, precipitated silica, silicic acid anhydride, silicic acid hydrate, carbon black, surface-treated fine calcium carbonate, crystalline silica, fused silica, calcined clay, clay, active zinc white, etc., can be used. Above all, ultrafine silica powder having a specific surface area (according to BET adsorption method) of 50 $m^2/g$ or more, usually 50 to 400 $m^2/g$, and preferably about 100 to 300 $m^2/g$ is preferable. Silica whose surface is subjected to hydrophobic treatment with an organosilicon compound, such as organosilane, organosilazane, or diorganopolysiloxane, is more preferable.

In order to produce cured objects having low strength and high elongation, a filler mainly selected from the group consisting of titanium oxide, calcium carbonate, talc, ferric oxide, zinc oxide, Shirasu balloons, etc., can be used. In general, with respect to calcium carbonate, if the specific surface area is small, the effects of improving breaking strength, elongation at break, adhesiveness, and weather-resistant adhesiveness of the resulting cured objects may

often be insufficient. With the increase in specific surface area, the effects of improving breaking strength, elongation at break, adhesiveness, and weather-resistant adhesiveness of the resulting cured objects become more significant.

Furthermore, surface-treated calcium carbonate treated with a surface treatment agent is more preferable. When surface-treated calcium carbonate is used, it is believed that the workability of the composition of the present invention is improved and the effects of improving adhesiveness and weather-resistant adhesiveness of the curable composition are more enhanced, compared with the use of calcium carbonate that is not surface-treated. Examples of the surface treatment agent include organic substances, such as fatty acids, fatty acid soaps, and fatty acid esters, various surfactants, and various coupling agents, such as silane coupling agents and titanate coupling agents. Specific examples thereof include, but are not limited to, fatty acids, such as caproic acid, caprylic acid, pelargonic acid, capric acid, undecanoic acid, lauric acid, myristic acid, palmitic acid, stearic acid, behenic acid, and oleic acid; sodium, potassium and other salts of such fatty acids, and alkyl esters of such fatty acids. Specific examples of the surfactants include sulfate-type anionic surfactants, such as polyoxyethylene alkyl ether sulfates and long-chain alcohol sulfates, and sodium, potassium and other salts thereof; and sulfonic acid-type anionic surfactants, such as alkylbenzenesulfonic acids, alkylnaphthalenesulfonic acids, paraffinsulfonic acids, $\alpha$-olefinsulfonic acids, alkylsulfosuccinic acids, and the like, and sodium, potassium and other salts thereof. The surface treatment agent is used for the treatment preferably in an amount of 0.1% to 20% by weight, and more preferably in an amount of 1% to 5% by weight, relative to calcium carbonate. If the amount for the treatment is less than 0.1% by weight, the effects of improving workability, adhesiveness and weather-resistant adhesiveness may be insufficient, and if the amount exceeds 20% by weight, the storage stability of the curable composition may be degraded.

Although non-limiting, when calcium carbonate is used and when thixotropy of the compound and the effects of improving breaking strength, elongation at break, adhesiveness, weather-resistant adhesiveness, and the like of the resulting cured objects are particularly expected, preferably ground calcium carbonate is used.

On the other hand, heavy calcium carbonate may be added to decrease the viscosity of the compound, increase the volume, and reduce the cost. As the heavy calcium carbonate, followings may be used as required.

Heavy calcium carbonate is produced by mechanically grinding and processing naturally occurring chalk, marble, limestone, or the like. While grinding is performed by a dry process or a wet process, products obtained by wet grinding often degrade the storage stability of the curable composition of the present invention, thus being not preferred. Heavy calcium carbonate products with various average particle sizes are obtained by classification. Although not particularly limited, when the effects of improving the breaking strength, elongation at break, adhesiveness, and weather-resistant adhesiveness of the resulting cured objects are expected, the specific surface area of the heavy calcium carbonate used is preferably 1.5 $m^2/g$ to 50 $m^2/g$, more preferably 2 $m^2/g$ to 50 $m^2/g$, further more preferably 2.4 $m^2/g$ to 50 $m^2/g$, and particularly preferably 3 $m^2/g$ to 50 $m^2/g$. If the specific surface are is less than 1.5 $m^2/g$, the improving effects may not be sufficient. Of course, when heavy calcium carbonate is used simply to decrease the viscosity or increase the volume, the ranges of the specific surface area are not limited to those described above.

The specific surface area is defined as a value measured by the air permeation method according to JIS K - 5101 (method in which the specific surface area is calculated based on the air permeability of a powder-packed layer). As the measurement apparatus, a specific surface area measurement apparatus model SS-100 manufactured by Shimadzu Corporation is preferably used.

These fillers may be used alone or in combination depending on the purpose or need. Although not particularly limited, for example, if heavy calcium carbonate and ground calcium carbonate with a specific surface area of 1.5 $m^2/g$ or more are combined as required, an increase in the viscosity of the compound is moderately reduced, and the effects of improving breaking strength, elongation at break, adhesiveness, and weather-resistant adhesiveness of the resulting cured objects are greatly expected.

The amount of the filler added is preferably 5 to 1,000 parts by weight, more preferably 20 to 500 parts by weight, and particularly preferably 40 to 300 parts by weight, relative to 100 parts by weight of the vinyl polymer. If the amount of the filler added is less than 5 parts by weight, the effects of improving breaking strength, elongation at break, adhesiveness, and weather-resistant adhesiveness of the resulting cured objects may often be insufficient. If the amount exceeds 1,000 parts by weight, the workability of the curable composition may often be degraded. The filler may be used alone or in combination.

<Fine hollow particles>

Furthermore, for the purpose of weight saving and cost reduction without substantially degrading the physical properties, fine hollow particles may be used together with the reinforcing fillers described above.

Such fine hollow particles (hereinafter referred to as "balloons") are not particularly limited. Examples thereof include inorganic or organic hollow particles with a diameter of 1 mm or less, preferably 500 μm or less, more preferably 200 μm or less, as described in "Kinosei filler no saishin gijutsu (Latest functional filler technology)" (CMC). In particular, fine hollow particles with a true specific gravity of 1.0 $g/cm^3$ or less are preferably used, and more preferably, 0.5 g/

$cm^3$ or less.

Examples of the inorganic balloons include silicic acid-based balloons and non-silicic acid-based balloons. Examples of the silicic acid-based balloons include Shirasu balloons, perlite, glass balloons, silica balloons, and fly ash balloons, and examples of the non-silicic acid-based balloons include alumina balloons, zirconia balloons, and carbon balloons. Specific examples of the inorganic balloons, which are commercially available, include Shirasu balloons, such as Winlite manufactured by Ijichi Chemical and Sankilite manufactured by Sanki Kogyo; glass balloons, such as Caloon manufactured by Nippon Sheet Glass, Celstar Z-28 manufactured by Sumitomo 3M, MICRO BALLOON manufactured by EMERSON & CUMING, CELAMIC GLASSMODULES manufactured by PITTSBURGE CORNING, and GLASS BUBBLES manufactured by 3M; silica balloons, such as Q-CEL manufactured by Asahi Glass and E-SPHERES manufactured by Taiheiyo Cement; fly ash balloons, such as, CEROSPHERES manufactured by PFAMARKETING and FILLITE manufactured by FILLITE U.S.A; alumina balloons, such as BW manufactured by Showa Denko; zirconia balloons, such as HOLLOW ZIRCONIUM SPHEES manufactured by ZIRCOA; carbon balloons, such as Kureka sphere manufactured by Kureha Chemical and Carbosphere manufactured by GENERAL TECHNOLOGIES.

Examples of the organic balloons include thermosetting resin balloons and thermoplastic resin balloons. Examples of thermosetting balloons include phenolic balloons, epoxy balloons, and urea balloons, and examples of thermoplastic balloons include saran balloons, polystyrene balloons, polymethacrylate balloons, poly(vinyl alcohol) balloons, and styrene-acrylic balloons. Balloons composed of crosslinked thermoplastic resins can also be used. Herein, the balloons may be expanded balloons, or mixtures containing blowing agents may be expanded to form balloons.

Specific examples of organic balloons, which are commercially available, include phenolic balloons, such as UCAR and PHENOLIC MICROBALLOONS manufactured by Union Carbide; epoxy balloons, such as ECCOSPHERES manufactured by EMERSON & CUMING; urea balloons, such as ECCOSPHERES VF-O manufactured by EMERSON & CUMING; saran balloons, such as SARAN MICROSPHERES manufactured by DOW CHEMICAL, Expancel manufactured by Nippon Filament, and Matsumoto Microsphere manufactured by Matsumoto Yushi-Seiyaku; polystyrene balloons, such as DYLITE EXPANDABLE POLYSTYRENE manufactured by ARCO POLYMERS and EXPANDABLE POLYSTYRENE BEADS manufactured by BASF WYANDOTE; and crosslinkable styrene-acrylic acid balloons, such as SX863(P) manufactured by Japan synthetic Rubber.

These balloons may be used alone, or two or more of these may be mixed for use. Further usable are the balloons whose surfaces are treated with a fatty acid, a fatty acid ester, rosin, rosin acid-lignin, a silane coupling agent, a titanate coupling agent, an alumina coupling agent, polypropylene glycol, or the like in order to improve dispersibility and the workability of the compound. These balloons are used for the purpose of weight saving and cost reduction without degrading flexibility and elongation/strength among the physical properties of the resulting cured objects.

Although not particularly limited, the balloon content is preferably 0.1 to 50 parts by weight, and more preferably 0.1 to 30 parts by weight relative to 100 parts by weight of the vinyl polymer. If the content is less than 0.1 parts, the effect of saving weight may be small, while if the content is more than 50 parts, tensile strength, among mechanical characteristics, of the resulting cured object may often be decreased. When the specific gravity of the balloon is 0.1 or more, the balloon content is preferably 3 to 50 parts, and more preferably 5 to 30 parts.

<Plasticizer>

The plasticizer which can be used is not particularly limited, and for example, may be selected from the following plasticizers depending on the purposes, such as adjustment of physical properties and adjustment of properties: phthalic acid esters, such as dibutyl phthalate, diheptyl phthalate, di(2-ethylhexyl) phthalate, and butyl benzyl phthalate; nonaromatic dibasic acid esters, such as dioctyl adipate, dioctyl sebacate, dibutyl sebacate, and isodecyl succinate; fatty acid esters, such as butyl oleate and methyl acetyl ricinoleate; polyalkylene glycol esters, such as diethylene glycol dibenzoate, triethylene glycol dibenzoate, and pentaerythritol esters; phosphates, such as tricresyl phosphate and tributyl phosphate; trimellitates; polystyrenes, such as polystyrene and poly-$\alpha$-methylstyrene; polybutadiene, polybutene, polyisobutylene, butadiene-acrylonitrile, and polychloroprene; chlorinated paraffins; hydrocarbon oils, such as alkyldiphenyls and partially hydrogenated terphenyl; process oils; polyethers, such as polyether polyols, e.g., polyethylene glycol, polypropylene glycol, and polytetramethylene glycol, and derivatives of these polyether polyols resulting from conversion of hydroxyl groups thereof to ester groups, ether groups, or the like; epoxy plasticizers, such as epoxidized soybean oil and benzyl epoxystearate; polyester plasticizers obtained from a dibasic acid, such as sebacic acid, adipic acid, azelaic acid, or phthalic acid, and a dihydric alcohol, such as ethylene glycol, diethylene glycol, triethylene glycol, propylene glycol, or dipropylene glycol; and vinyl polymers obtained by polymerizing vinyl monomers by various methods, typically acrylic plasticizers.

Above all, by using a high molecular weight plasticizer having a number-average molecular weight of 500 to 15,000, it is possible to adjust the viscosity of the curable composition and the mechanical characteristics, such as tensile strength and elongation, of the cured object obtained by curing the composition. It is also possible to maintain

the original physical properties for a longer period of time, compared with a low molecular weight plasticizer which does not contain polymer components in the molecule, and it is possible to improve drying characteristics (also referred to as "paintability") when the cured object is coated with alkyl paint. Additionally, although non-limiting, the high molecular weight plasticizer may or may not contain a functional group.

Although the high molecular weight plasticizer with a number-average molecular weight of 500 to 15,000 has been described above, the number-average molecular weight is preferably 800 to 10,000, and more preferably 1,000 to 8,000. If the molecular weight is too low, the plasticizer flows out with time due to heat or rainfall, and thus it is not possible to maintain the original physical properties for a long period of time. In some cases, paintability of alkyd paint cannot be improved. If the molecular weight is too high, viscosity increases, resulting in degradation in workability.

Among these high molecular weight plasticizers, those which are compatible with vinyl polymers are preferable. In particular, in view of compatibility, weatherability, and heat resistance, vinyl polymers are preferable. Among the vinyl polymers, (meth)acrylic polymers are preferable, and acrylic polymers are more preferable. Examples of the synthesis method for such acrylic polymers include conventional solution polymerization and a method for synthesizing an acrylic polymer in the absence of a solvent. The acrylic plasticizer synthesized by the latter method is more preferable for the object of the present invention because the plasticizer is produced in the absence of a solvent or a chain transfer agent by high-temperature continuous polymerization (refer to USP 4,414,370, Japanese Unexamined Patent Application Publication No. 59-6207, Japanese Examined Patent application Publication No. 5-58005, Japanese Unexamined Patent Application Publication No. 1-313522, and USP 5,010,166). Examples thereof include, but are not limited to, Toagosei UP series (refer to Kogyo Zairyo (Engineering Materials), October, 1999). Of course, as another synthesis method, living radical polymerization may be used. According to this method, a polymer having a narrow molecular-weight distribution and a low viscosity can be produced, thus being preferable. Furthermore, atom transfer radical polymerization is more preferable, although not limited thereto.

The molecular-weight distribution of the high molecular weight plasticizer is not particularly limited, but a narrow molecular-weight distribution is preferable. The molecular-weight distribution is preferably less than 1.8, more preferably 1.7 or less, still more preferably 1.6 or less, even more preferably 1.5 or less, particularly preferably 1.4 or less, and most preferably 1.3 or less.

The plasticizers including the high molecular weight plasticizers may be used alone or in combination, but are not necessarily required. As necessary, in addition to a high molecular weight plasticizer, a low molecular weight plasticizer may also be used in such an extent that physical properties are not adversely affected.

These plasticizers may be added during the production of the polymer.

The amount of the plasticizer used is not limited, but is 5 to 150 parts by weight, preferably 10 to 120 parts by weight, and more preferably 20 to 100 parts by weight, relative to 100 parts by weight of the vinyl polymer. If the amount is less than 5 parts by weight, the effect of the plasticizer is not exhibited, and if the amount exceeds 150 parts by weight, the mechanical strength of the resulting cured object becomes insufficient.

In addition to the plasticizer described above, a reactive diluent, which will be described below, may also be used in the present invention. Examples of the reactive diluent include an organic compound having at least one hydrosilylatable alkenyl group or alkynyl group per molecule. Such a compound decreases the viscosity of the composition before being cured, and is bonded with the Si-H group of the hydrosilyl group-containing compound (II) due to hydrosilylation, resulting in incorporation into a network structure during curing reaction. Therefore, in the present invention, any organic compound having at least one hydrosilylatable alkenyl group or alkynyl group per molecule may be used without limitations. In view of good compatibility with the vinyl polymer (I) of the present invention, a compound having a polar group, such as an ester group, is preferable. The molecular weight of the compound is preferably as low as possible because compatibility is enhanced. However, the molecular weight may be high to a certain extent as long as satisfactory compatibility is shown. In view of heat resistance, weatherability, etc., which is the characteristics of the composition of the present invention, more preferably, the reactive diluent compound does not contain a carbon-carbon unsaturated bond that shows low activity to hydrosilylation.

If a low-boiling-point compound which can be vaporized during curing is used as the reactive diluent compound, a change in shape occurs during curing or the environment is also adversely affected by the volatile matter. Therefore, an organic compound having a boiling point of 100°C or more at normal temperatures is particularly preferable. Specific examples of the reactive diluent compound include, but are not limited to, 1-octene, 4-vinylcyclohexane, allyl acetate, 1,1-diacetoxy-2-propene, methyl 1-undecenoate, and 8-acetoxy-1,6-octadiene.

On the other hand, the amount of the reactive diluent compound to be added is not particularly limited as long as formation of the three-dimensional crosslinked structure due to hydrosilylation between the vinyl polymer (I) and the hydrosilyl group-containing compound (II) is not inhibited. Namely, when the amount of the reactive diluent compound added is in excess, the Si-H group of the hydrosilyl group-containing compound (II) is consumed by the hydrosilylation reaction with the unsaturated group of the reactive diluent compound, and in some cases, the formation of the three-dimensional crosslinked structure by the vinyl polymer (I) may become insufficient.

The reactive diluent compound is used in an amount of 0.1 to 100 parts by weight, preferably 0.5 to 70 parts

by weight, and particularly preferably 1 to 50 parts by weight, relative to 100 parts by weight of the vinyl polymer (I).

<Solvent>

Examples of the solvent which may be added include aromatic hydrocarbon solvents, such as toluene and xylene; ester solvents, such as ethyl acetate, butyl acetate, amyl acetate, and Cellosolve acetate; and ketone solvents, such as methyl ethyl ketone, methyl isobutyl ketone, and diisobutyl ketone. These solvents may be used during the production of the polymer.

<Curability-adjusting agent>

Examples of the curability-adjusting agent which can be used include compounds containing an aliphatic unsaturated bond. Examples thereof include acetylene alcohols represented by the following formula:

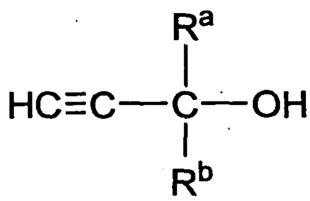

(wherein $R^a$ and $R^b$, which may be the same or different, each represent a hydrogen atom, an alkyl group having 1 to 10 carbon atoms, or an aryl group having 6 to 10 carbon atoms, and $R^a$ and $R^b$ may be bonded to each other).

In particular, in these acetylene alcohols, the bulkiness of $R^a$ or $R^b$ is greatly concerned in the storage stability. Those having $R^a$ or $R^b$ with high bulkiness are preferable because of excellent storage stability at high temperatures. However, if the bulkiness of $R^a$ or $R^b$ is too high, curability is degraded although storage stability is excellent. Therefore, it is important to select an acetylene alcohol that is well balanced between storage stability and curability. Examples of the acetylene alcohol that is well balanced between storage stability and curability include 2-phenyl-3-butyn-2-ol, 1-ethynyl-1-cyclohexanol, 3,5-dimethyl-1-hexyn-3-ol, 3-methyl-1-hexyn-3-ol, 3-ethyl-1-pentyn-3-ol, 2-methyl-3-butyn-2-ol, and 3-methyl-1-pentyn-3-ol.

Examples of the compound containing an aliphatic unsaturated bond, which improves storage stability at high temperatures, other than acetylene alcohols, include ene-yne compounds represented by the following formula:

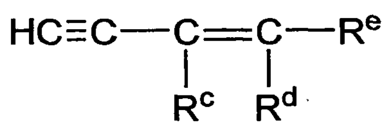

(wherein $R^c$, $R^d$, and $R^e$, which may be the same or different, each represent a hydrogen atom or a hydrocarbon group having 1 to 6 carbon atoms, the total of the carbon atoms of $R^c$, $R^d$, and $R^e$ being 2 to 6; and when $R^c$ and $R^d$, or $R^d$ and $R^e$ are hydrocarbon groups, $R^c$ and $R^d$, or $R^d$ and $R^e$ may be bonded to each other);
silane compounds represented by the following formula:

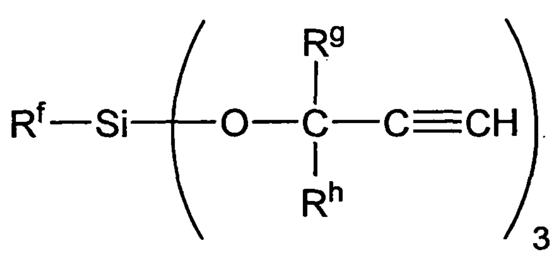

(wherein $R^f$, $R^g$, and $R^h$, which may be the same or different, each represent a hydrocarbon group having 1 to 10 carbon atoms; and $R^g$ and $R^h$ may be bonded to each other); polysiloxane compounds represented by the following formula:

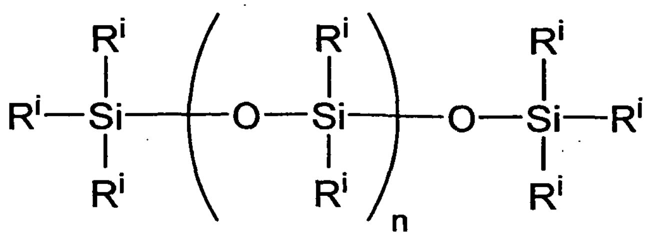

(wherein $R^i$s, which may be the same or different, each represent a hydrocarbon group having 1 to 10 carbon atoms, at least one $R^i$ having an acetylenic unsaturated bond; and n is an integer of 1 to 10);
olefin compounds represented by the following formula:

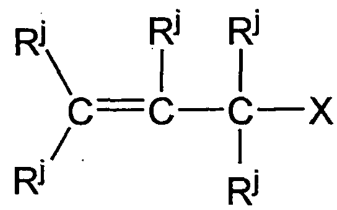

(wherein $R^j$s, which may be the same or different, each represent a hydrogen atom, a halogen, or a monovalent hydrocarbon group having 1 to 10 carbon atoms; X is a halogen group, such as chlorine or bromine, or an alkoxy group); aliphatic carboxylates of olefinic alcohols, such as vinyl acetate; cyclic tetravinylsiloxane; nitriles containing an aliphatic unsaturated bond, such as 2-pentenenitrile; alkyl acetylenedicarboxylate; maleates; and diorgano fumarates.

The curability-adjusting agent can be used substantially in any amount as long as the curability-adjusting agent is homogeneously dispersed in the components (A) and (B). Preferably, the curability-adjusting agent is used in an amount of 2 to 10,000 mole equivalents of the component (C), i.e., the hydrosilylation catalyst. The curability-adjusting agents may be used alone or in combination.

<Adhesion-imparting agent>

When the curable composition of the present invention alone is used as molding rubber, it is not necessary to add an adhesion-imparting agent. However, when necessary, for example, in two color molding in which another type of base material is used together with the curable composition, it is possible to add an adhesion-imparting agent to such an extent that crosslinking between the vinyl polymer (I) and the hydrosilyl group-containing compound (II) is not significantly inhibited, physical properties of the resulting cured object are not significantly affected, and mold release properties obtained by the present invention are not affected. Any adhesion-imparting agent that imparts adhesiveness to the curable composition may be used without limitations. As the adhesion-imparting agent, a crosslinkable silyl group-containing compound is preferable, and a silane coupling agent is further preferable. Specific examples thereof include alkylalkoxysilanes, such as methyltrimethoxysilane, dimethyldimethoxysilane, trimethylmethoxysilane, and n-propyltrimethoxysilane; alkylisopropenoxysilanes, such as dimethyldiisopropenoxysilane and methyltriisopropenoxysilane; vinyl unsaturated group-containing silanes, such as vinyltrimethoxysilane, vinyldimethylmethoxysilane, vinyltriethoxysilane, $\gamma$-methacryloyloxypropylmethyldimethoxysilane, and $\gamma$-acryloyloxypropylmethyltriethoxysilane; silicone varnishes; and polysiloxanes.

Among them, preferred are silane coupling agents which have both an organic group containing a noncarbon, nonhydrogen atom, such as an epoxy group, a (meth)acrylic group, an isocyanato group, an isocyanurate group, a carbamate group, an amino group, a mercapto group, or a carboxyl group, and a crosslinkable silyl group per molecule. Specific examples thereof include, as isocyanato group-containing alkoxysilanes, isocyanato group-containing silanes,

such as γ-isocyanatopropyltrimethoxysilane, γ-isocyanatopropyltriethoxysilane, γ-isocyanatopropylmethyldiethoxysilane, and γ-isocyanatopropylmethyldimethoxysilane; as isocyanurate group-containing alkoxysilanes, isocyanurate silanes, such as tris(trimethoxysilyl) isocyanurate; as amino group-containing alkoxysilanes, amino group-containing silanes, such as γ-aminopropyltrimethoxysilane, γ-aminopropyltriethoxysilane, γ-aminopropylmethyldimethoxysilane, γ-aminopropylmethyldiethoxysilane, N-(β-aminoethyl)-γ-aminopropyltrimethoxysilane, N-(β-aminoethyl)-γ-aminopropylmethyldimethoxysilane, N-(β-aminoethyl)-γ-aminopropyltriethoxysilane, N-(β-aminoethyl)-γ-aminopropylmethyldiethoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; as mercapto group-containing alkoxysilanes, mercapto group-containing silanes, such as γ-mercaptopropyltrimethoxysilane, γ-mercaptopropyltriethoxysilane, γ-mercaptopropylmethyldimethoxysilane, and γ-mercaptopropylmethyldiethoxysilane; as carboxyl group-containing alkoxysilanes, carboxysilanes such as β-carboxyethyltriethoxysilane, β-carboxyethylphenylbis(2-methoxyethoxy)silane, and N-β-(carboxymethyl)aminoethyl-γ-aminopropyltrimethoxysilane; and as halogen group-containing alkoxysilanes, halogen-containing silanes, such as γ-chloropropyltrimethoxysilane.

Also usable as the silane coupling agent are modification derivatives of these, for example amino-modified silyl polymers, silylated amino polymers, unsaturated amino silane complexes, phenylamino-long chain alkylsilanes, aminosilylated silicones, and silylated polyesters.

Among them, in view of curability and adhesiveness, alkoxysilanes containing an epoxy group or a (meth) acrylic group per molecule are more preferable. Examples thereof more specifically include, as epoxy group-containing alkoxysilanes, γ-glycidoxypropylmethyldimethoxysilane, γ-glycidoxypropyltrimethoxysilane, γ-glycidoxypropyltriethoxysilane, β-(3,4-epoxycyclohexyl)ethyltrimethoxysilane, β-(3,4-epoxycyclohexyl)ethyltriethoxysilane, and γ-glycidoxypropylmethyldiisopropenoxysilane; and as (meth)acrylic group-containing alkoxysilanes, γ-methacryloxypropyltrimethoxysilane, γ-methacryloxypropyltriethoxysilane, γ-acryloxypropyltrimethoxysilane, γ-acryloxypropyltriethoxysilane, methacryloxymethyltrimethoxysilane, methacryloxymethyltriethoxysilane, acryloxymethyltrimethoxysilane, and acryloxymethyltriethoxysilane. These may be used alone or in combination.

In order to further improve adhesiveness, a crosslinkable silyl group-containing condensation catalyst may be used together with the adhesion-imparting agent. Examples of the crosslinkable silyl group-containing condensation catalyst include organotin compounds, such as dibutyltin dilaurate, dibutyltin diacetylacetonate, dibutyltin dimethoxide, and tin octylate; organoaluminum compounds, such as aluminum acetylacetonate; and organotitanium compounds, such as tetraisopropoxy titanium and tetrabutoxy titanium.

Specific examples of the adhesion-imparting agent other than the silane coupling agent include, but are not limited to, epoxy resins, phenol resins, sulfur, alkyl titanates, and aromatic polyisocyanates.

Preferably, the adhesion-imparting agent is added in an amount of 0.01 to 20 parts by weight relative to 100 parts by weight of the vinyl polymer (I). If the amount is less than 0.01 parts by weight, the effect of improving adhesiveness is small, and if the amount exceeds 20 parts by weight, physical properties of the resulting cured object are adversely affected. The amount is preferably 0.1 to 10 parts by weight, and more preferably 0.5 to 5 parts by weight.

The adhesion-imparting agents described above may be used alone or in combination.

<<Method for producing cured object>>

The vinyl polymer (I) and the hydrosilyl group-containing compound (II) can be mixed in any ratio. In view of curability, the molar ratio of the alkenyl group to the hydrosilyl group is preferably in a range of 5 to 0.2, and more preferably 2.5 to 0.4. If the molar ratio exceeds 5, curing becomes insufficient, and only a tacky cured object with small strength is produced. If the molar ratio is less than 0.2, a large amount of active hydrosilyl group remains in the cured object even after curing, resulting in cracks and voids, and thus it is not possible to produce a cured object that is homogeneous and strong.

In the present invention, since the curable composition is cured by addition reaction of the Si-H group to the alkenyl group in the presence of a noble metal catalyst, the curing rate is extremely high, which is advantageous to the line production system. In particular, the heat curing temperature is preferably 100°C to 180°C. If the temperature is lower than 100°C, curing reaction does not substantially proceed because of high storage stability of the composition. If the temperature exceeds 100°C, hydrosilylation reaction rapidly proceeds, and thus a cured object can be produced in a short period of time.

Since the curable composition of the present invention has high storage stability even at relatively high temperatures, the composition can be handled at lower viscosity, thus being suitable for high-temperature liquid injection molding, etc.

In the present invention, the curable composition is allowed to flow preferably in a temperature range from 30°C or more to less than 100°C, and more preferably from 40°C to less than 80°C.

Furthermore, in the present invention, the curable composition is allowed to flow in a temperature range from 30°C or more to less than 100°C and simultaneously curing reaction can be performed while the curable composition

is being allowed to flow at 30°C or more. That is, the curable composition of the present invention can also be used as a resin for injection molding (RIM, LIM, etc.).

<<Molding method>>

When the curable composition of the present invention is used as molded objects, the molding method is not particularly limited, and any conventional molding method may be employed. Examples of the molding method include cast molding, compression molding, transfer molding, injection molding, extrusion, rotational molding, hollow molding, and thermoforming. In particular, injection molding is preferable in view that automation and continuous processing are enabled and high productivity is achieved.

<<Application>>

The curable composition of the present invention can be used in various applications. Examples thereof include, but are not limited to, materials for electrical and electronic components, such as sealants used for back surfaces of solar cells; electrical insulating materials, such as insulating materials for electric wires and cables; coating materials; foams; potting materials for electrical and electronic use; films; gaskets; casting materials; artificial marble; various molding materials; and sealants used for rust-proofing and water-proofing of edges (cut sections) of wire glass and laminated glass.

Furthermore, molded objects obtained from the curable compositions of the present invention, which exhibit rubber elasticity, can be used mainly for gaskets and packings in various fields. In the automobile field, examples of possible uses are, as body components, sealants for hermetic sealing, vibration isolating materials for glass, vibration isolating materials for car bodies, and in particular, window seal gaskets and gaskets for door glass; as chassis components, engine and suspension rubber for vibration and sound isolation, and in particular, engine mount rubber; and as engine components, hoses for cooling, fuel supply, exhaust emission control, etc., and sealants for engine oil. The molded objects may also be used for exhaust gas cleaner parts, brake parts, etc. In the home electric appliance field, the molded objects may be used as packings, O-rings, and belts. Specific examples are ornaments, waterproof packings, vibration-proof rubber, and insect-proof packings for lighting equipment; vibration isolating materials, sound absorbing materials, and air seals for cleaners; drip-proof covers, waterproof packings, heater packings, electrode packings, and safety valve diaphragms for electric hot-water generators; hoses, waterproof packings, and solenoid valves for sake warmers; waterproof packings, feed-water tank packings, feed-water valves, water catch packings, connecting hoses, belts, heater packings, steam blowout hole seals, etc., for steam ovens and rice cookers with automatic keep warm features; oil packings, O-rings, drain packings, pressure tubes, blast tubes, inlet/outlet packings, vibration-proof rubber, fuel inlet packings, fuel gauge packings, oil feed tubes, diaphragm valves, air feed tubes, etc., for burners; and speaker gaskets, speaker edges, turntable sheets, belts, pulleys, etc., for audio equipment. In the architectural field, the molded objects may be used as structural gaskets (zipper gaskets), materials for air dome structures, waterproof materials, molded sealants, vibration isolating materials, soundproofing materials, setting blocks, slider materials, etc. In the sports field, examples of uses are all-weather pavement materials, gymnasium floor materials, etc., for sports floors; sole materials, inner sole materials, etc., and for sports shoes; balls used in ball games, such as golf balls. In the vibration-proof rubber fields, the molded objects may be used as vibration-proof rubber for automobiles, vibration-proof rubber for railroad vehicles, vibration-proof rubber for airplanes, fenders, etc. In the marine engineering fields, examples of uses are, as structural materials, rubber expansion joints, supports, water stops, waterproof sheets, rubber dams, elastic pavement materials, vibration-proof pads, fenders, etc.; as submaterials for engineering work, rubber mold forms, rubber packers, rubber skirts, sponge mats, mortar hoses, mortar strainers, etc.; as auxiliary materials for engineering work, rubber sheets, air hoses, etc.; as products for safety, rubber buoys, wave absorbers, etc.; and as products for environmental protection, oil fences, silt fences, stainproofing materials, marine hoses, dredging hoses, oil skimmers, etc. The molded objects may also be used as plate rubber, mats, foam plates, and the like.

[EXAMPLES]

Examples of the present invention together with comparative examples will be described below. However, the invention is not limited to the examples.

In the following examples and comparative examples, "part(s)" and "%" mean "part(s) by weight" and "% by weight", respectively. In the examples, the term "triamine" means "pentamethyldiethylenetriamine".

In the following examples, the "number-average molecular weight" and the "molecular-weight distribution (ratio of weight-average molecular weight to number-average molecular weight)" was calculated on the basis of a polystyrene standard sample using gel permeation chromatography (GPC). In the GPC, a GPC column packed with crosslinked polystyrene gel (shodex GPC K-804; manufactured by Showa Denko) was used, and chloroform was used

as a GPC solvent.

With respect to mold release properties, releasability of cured objects from molds was evaluated using the following four criteria.

⊙: Cured object was released from mold easily.
O: Cured object was released from mold although some sticking was experienced.
Δ: Cured object partially remained in mold due to sticking.
×: Cured object was not released from mold due to sticking.

(Production Example 1)

A 250-L reactor equipped with an agitator and a jacket was charged with CuBr (1.11 kg), and the reactor was nitrogen-purged. Acetonitrile (5.0 kg) was added thereto, warm water was flowed in the jacket, and stirring was performed at 70°C for 15 minutes. A mixture of butyl acrylate (6.6 kg), ethyl acrylate (9.5 kg), methoxyethyl acrylate (7.8 kg), diethyl 2,5-dibromoadipate (3.09 kg), and acetonitrile (5.0 kg) was added thereto, and stirring was further performed at 70°C for 30 minutes. Pentamethyldiethylenetriamine (hereinafter referred to as "triamine") was added thereto to initiate reaction. During the reaction, triamine was added to the reaction mixture as appropriate, and polymerization was carried out at an internal temperature of about 70°C to 80°C. The total amount of triamine used in the polymerization step was 45 g. After 4 hours from the initiation of the reaction, unreacted monomer and acetonitrile were distilled off by stirring at 80°C under reduced pressure. Acetonitrile (29.9 kg), 1,7-octadiene (28.4 kg), and triamine (446 g) were added to the concentrate, and stirring was continued for 6 hours. The mixture was stirred at 80°C under reduced pressure to distill off acetonitrile and unreacted 1,7-octadiene, and concentration was performed. Toluene (120 kg) was added to the concentrate to dissolve the polymer. Solid copper in the polymer mixture was filtered off with a bag filter (manufactured by HAYWARD, filter cloth nominal hole diameter: 1 μm). To the filtrate was added Kyowaad 500SH (manufactured by Kyowa Chemical; 2 parts by weight relative to 100 parts by weight of the copolymer) and Kyowaad 700SL (manufactured by Kyowa Chemical; 2 parts by weight relative to 100 parts by weight of the copolymer), and stirring was performed in a mixed gas atmosphere of oxygen and nitrogen (oxygen concentration 6%) at 120°C for 2 hours. Insolubles in the mixture were filtered off. The filtrate was concentrated, and a copolymer was thereby obtained. The Br group was removed by devolatization from the copolymer by heating the copolymer at 180°C for 12 hours (at a reduced pressure of 10 Torr or less).

To the copolymer was added toluene (100 parts by weight relative to 100 parts by weight of the copolymer), Kyowaad 500SH (manufactured by Kyowa Chemical; 2 parts by weight relative to 100 parts by weight of the copolymer), Kyowaad 700SL (manufactured by Kyowa Chemical; 2 parts by weight relative to 100 parts by weight of the copolymer), and hindered phenolic antioxidant (Irganox 1010; Ciba Specialty Chemicals 0.05 parts), and stirring was performed in a mixed gas atmosphere of oxygen and nitrogen (oxygen concentration 6%) at 130°C for 4 hours. Insolubles in the mixture were filtered off. By concentrating the filtrate, an alkenyl group-terminated copolymer, i.e., alkenyl-terminated poly(butyl acrylate, ethyl acrylate, methoxyethyl acrylate) copolymer [P1] was obtained.

The number-average molecular weight of the copolymer [P1] was 18,000, and the molecular-weight distribution was 1.1. The average number of alkenyl groups introduced into the polymer per molecule determined by $^1$H NMR analysis was 1.9.

(Example 1)

To 100 parts of the copolymer [P1] obtained in Production Example 1 was added 20 parts of Aerogel R974 (average size of primary particle 12 nm: manufactured by Japan Aerogel) as reinforcing silica and 1 part of magnesium stearate (Trade name: SM-1000, manufactured by Sakai Chemical) as a metal soap, and mixing was performed thoroughly using a three roll mill for paint. To the copolymer [P1] was added a linear siloxane (containing average five hydrosilyl groups and average five α-methylstyrene groups per molecule: Si-H group content 3.70 mmol/g) such that the SiH group of the linear siloxane was in an amount of 1.8 equivalents of the alkenyl group of the copolymer [P1]. A xylene solution of zero-valent platinum-1,1,3,3-tetramethyl-1,3-divinyldisiloxane complex ($1.32 \times 10^{-5}$ mmol/μl) was added thereto in an amount, in terms of platinum, of $5 \times 10^{-4}$ mole equivalents of the alkenyl group of the copolymer [P1], and mixing was further performed uniformly. The resulting curable composition was degassed fully in a vacuum oven at 50°C, and then poured into a mold composed of stainless steel. Press curing was performed at 150°C for 100 minutes, and immediately after that (while the cured object was hot), releasability from the mold was evaluated. The result is shown in Table 1.

(Example 2)

Releasability was evaluated as in Example 1 except that 1 part of calcium stearate (trade name: SC-100, manufactured by Sakai Chemical) was used as a metal soap. The result is shown in Table 1.

(Example 3)

Releasability was evaluated as in Example 1 except that 1 part of zinc stearate (trade name: SZ-100, manufactured by Sakai Chemical) was used as a metal soap. The result is shown in Table 1.

(Example 4)

Releasability was evaluated as in Example 1 except that 1 part of zinc stearate (trade name SZ-100, manufactured by Sakai Chemical) was used, and after press curing, the mold was cooled to room temperature before evaluation of releasability. The result is shown in Table 1.

(Example 5)

Releasability was evaluated as in Example 1 except that 0.5 parts of zinc stearate (trade name: SZ-100, manufactured by Sakai Chemical) was used as a metal soap. The result is shown in Table 1.

(Example 6)

Releasability was evaluated as in Example 1 except that 0.5 parts of zinc stearate (trade name: SZ-P, manufactured by Sakai Chemical) was used as a metal soap. The result is shown in Table 1.

(Example 7)

Releasability was evaluated as in Example 1 except that 0.5 parts of zinc stearate (trade name: SZ-P, manufactured by Sakai Chemical) was used as a metal soap and press curing was performed at 200°C for 10 minutes. The result is shown in Table 1.

(Example 8)

Releasability was evaluated as in Example 1 except that 3,5-dimethyl-1-hexyn-3-ol (trade name: Surfinol 61, manufactured by Nissin Chemical) was used, as a curability-adjusting agent, in an amount of $30 \times 10^{-4}$ mole equivalents of the alkenyl group of the copolymer [P1]. The result is shown in Table 1.

(Example 9)

Releasability was evaluated as in Example 1 except that 1 part of zinc laurate (trade name: LZ-P, manufactured by Sakai Chemical) was used as a metal soap. The result is shown in Table 1.

(Comparative Example 1)

Releasability was evaluated as in Example 1 except that no metal soap was used. The result is shown in Table 1.

(Comparative Example 2)

Releasability was evaluated as in Example 1 except that no metal soap was used and press curing was performed at 200°C for 10 minutes. The result is shown in Table 1.

TABLE 1

| | Example 1 | Example 2 | Example 3 | Example 4 | Example 5 | Example 6 |
|---|---|---|---|---|---|---|
| Mold releasability | ○ | ○ | ⊙ | ○ | ⊙ | ⊙ |

(continuation of TABLE 1)

| | Example 7 | Example 8 | Example 9 | Comparative Example 1 | Comparative Example 2 |
|---|---|---|---|---|---|
| Mold releasability | ⊙ | ○ | Δ | × | × |

As shown in Comparative Examples 1 and 2 in Table 1, when no metal soap is used, mold release properties are insufficient. As is evident from Examples 1 to 8, the curable compositions of the present invention have excellent mold release properties.

Industrial Applicability

The present invention can provide a curable composition for molding which has excellent mold release properties by using, as essential components, an alkenyl group-containing vinyl polymer, a hydrosilyl group-containing compound, a hydrosilylation catalyst, and a metal soap. The vinyl polymer is produced preferably by living radical polymerization, and more preferably by atom transfer radical polymerization, so that the molecular weight and the functionality factor are controlled precisely, thus enabling proper control of physical properties.

## Claims

1. A curable composition comprising the following four components as essential components:

   (A) a vinyl polymer (I) containing at least one hydrosilylatable alkenyl group per molecule;
   (B) a hydrosilyl group-containing compound (II);
   (C) a hydrosilylation catalyst; and
   (D) a metal soap.

2. The curable composition according to Claim 1, wherein the vinyl polymer (I) has a molecular-weight distribution of less than 1.8.

3. The curable composition according to Claim 1 or 2, wherein the main chain of the vinyl polymer (I) is produced by mainly polymerizing a monomer selected from the group consisting of (meth)acrylic monomers, acrylonitrile monomers, aromatic vinyl monomers, fluorine-containing vinyl monomers, and silicon-containing vinyl monomers.

4. The curable composition according to any one of Claims 1 to 3, wherein the vinyl polymer (I) is a (meth)acrylic polymer.

5. The curable composition according to any one of Claims 1 to 4, wherein the vinyl polymer (I) is an acrylic polymer.

6. The curable composition according to any one of Claims 1 to 5, wherein the vinyl polymer (I) is an acrylate polymer.

7. The curable composition according to any one of Claims 1 to 6, wherein the main chain of the vinyl polymer (I) is produced by living radical polymerization.

8. The curable composition according to Claim 7, wherein the living radical polymerization is atom transfer radical polymerization.

9. The curable composition according to Claim 8, wherein the atom transfer radical polymerization is carried out using, as a catalyst, a transition metal complex of an element selected from Groups 7, 8, 9, 10, and 11 of the

periodic table as a central metal.

**10.** The curable composition according to Claim 9, wherein the metal complex used as the catalyst is a complex selected from the group consisting of copper complexes, nickel complexes, ruthenium complexes, and iron complexes.

**11.** The curable composition according to Claim 10, wherein the metal complex used as the catalyst is a copper complex.

**12.** The curable composition according to any one of Claims 1 to 11, wherein the component (A) is a vinyl polymer produced by a process comprising the steps of:

(1) subjecting a vinyl monomer to atom transfer radical polymerization to produce a vinyl polymer having a terminal structure represented by general formula (1):

$$-C(R^1)(R^2)(X) \qquad (1)$$

(wherein $R^1$ and $R^2$ each represent a group bonded to an ethylenically unsaturated group of a vinyl monomer, and X represents a chlorine, bromine, or iodine atom); and
(2) converting the terminal halogen of the polymer into a substituent containing a hydrosilylatable alkenyl group.

**13.** The curable composition according to any one of Claims 1 to 11, wherein the component (A) is a vinyl polymer produced by a process comprising the steps of:

(1) subjecting a vinyl monomer to living radical polymerization to produce a vinyl polymer; and
(2) subjecting a compound having at least two alkenyl groups with low polymerizability to reaction with the vinyl polymer.

**14.** The curable composition according to any one of Claims 1 to 13, wherein the vinyl polymer (I) contains a hydrosilylatable alkenyl group at a terminus of the polymer.

**15.** The curable composition according to any one of Claims 1 to 14, wherein the hydrosilyl group-containing compound (II) is an organohydrogen polysiloxane.

**16.** The curable composition according to any one of Claims 1 to 15, wherein the component (D) is a metal stearate.

**17.** The curable composition according to Claim 16, wherein the component (D) is at least one metal stearate selected from the group consisting of calcium stearate, magnesium stearate, and zinc stearate.

**18.** The curable composition according to any one of Claims 1 to 17, further comprising, as a component (E), reinforcing silica.

**19.** The curable composition according to Claim 1, wherein the molar ratio of the alkenyl group of the component (A) to the hydrosilyl group of the component (B) is 5 to 0.2, the component (C) is used in an amount of $10^{-1}$ to $10^{-8}$ mole per mole of the alkenyl group of the component (A), and the component (D) is used in an amount of 0.025 to 5 parts by weight relative to 100 parts by weight of the component (A).

**20.** A method for improving mold release properties of a cured object comprising adding (D) a metal soap to a curable composition containing, as essential components, (A) a vinyl polymer (I) containing at least one hydrosilylatable alkenyl group per molecule, (B) a hydrosilyl group-containing compound (II), and (C) a hydrosilylation catalyst.

**21.** A cured object prepared from the curable composition according to any one of Claims 1 to 19.

**22.** The cured object according to Claim 21, wherein the cured object is not substantially damaged during removal from mold after formation of a molded object.

## INTERNATIONAL SEARCH REPORT

International application No.
PCT/JP03/09126

A. CLASSIFICATION OF SUBJECT MATTER
Int.Cl[7] C08L57/00, C08K5/00, B29C33/60

According to International Patent Classification (IPC) or to both national classification and IPC

B. FIELDS SEARCHED

Minimum documentation searched (classification system followed by classification symbols)
Int.Cl[7] C08L1/00-101/16, C08K3/00-13/08, B29C33/60

Documentation searched other than minimum documentation to the extent that such documents are included in the fields searched

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| Y | JP 2001-342350 A (Kaneka Corp.), 14 December, 2001 (14.12.01), Claims; examples (Family: none) | 1-22 |
| Y | EP 604104 A2 (SHINETSU CHEM. CO., LTD.), 29 June, 1994 (29.06.94), Claims; examples & JP 06-234921 A Claims; examples | 1-22 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 October, 2003 (21.10.03) | 04 November, 2003 (04.11.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/09126

C (Continuation). DOCUMENTS CONSIDERED TO BE RELEVANT

| Category* | Citation of document, with indication, where appropriate, of the relevant passages | Relevant to claim No. |
|---|---|---|
| Y | EP 985710 A1 (DOW CORNING TORAY SILICONE CO., LTD.), 15 March, 2000 (15.03.00), Claims; examples & JP 2000-86896 A Claims; examples & US 6297305 B1 | 1-22 |

Form PCT/ISA/210 (continuation of second sheet) (July 1998)